# EUROPEAN PATENT APPLICATION

(11) **EP 4 794 443 A1**
(43) Date of publication of application: **19.08.2026**
(21) Application number: 24879742.5
(22) Date of filing: 16.10.2024
(51) Int. Cl.: H04W 76/12, H04W 80/04, H04W 88/16

(54) **SYSTEM AND METHOD**

(30) Priority: 16.10.2023 JP 2023178324
(71) Applicant: Softbank Corp., Tokyo 105-7529 (JP); BBSakura Networks, Inc., Tokyo 160-0023 (JP)
(72) Inventor: SASAKI Hideyuki, Tokyo 105-7529 (JP); KUSAKABE Yuya, Tokyo 160-0023 (JP)
(74) Representative: Dilg, Haeusler, Schindelmann Patentanwaltsgesellschaft mbH
(86) International application number: PCT/JP2024/036835
(87) International publication number: WO 2025/084320

(57) **Abstract**

Provided is a system including: an SGW; a plurality of PGWs; and a memory unit, in which each PGW of the plurality of PGWs is disposed in a network having a different ASN, and a same IP address is assigned to each PGW, the SGW transmits a session creation request of a communication terminal to a PGW selected as a transmission destination of the session creation request, the PGW selected as the transmission destination of the session creation request creates session information of the communication terminal, registers the session information in the memory unit, and transmits a session creation response to the SGW, the SGW transmits uplink data of the communication terminal to a PGW selected as a transmission destination of the uplink data, and the PGW selected as the transmission destination of the uplink data acquires the session information from the memory unit.

## Description

### TECHNICAL FIELD

The present invention relates to a system and a method.

### BACKGROUND ART

Patent Document 1 describes a communication system that reduces packet transmission delay in international roaming. Patent Document 2 describes a communication system that reduces communication delay in roaming communication.

### RELATED ART DOCUMENTS

### PATENT DOCUMENTS

Patent Document 1: International Publication No. 2014/049668
Patent Document 2: International Publication No. 2020/261458

### GENERAL DISCLOSURE

According to one embodiment of the present invention, a system is provided. The system may include a Serving Gateway (SGW). The system may include a plurality of Packet data network Gateways (PGWs). The system may include a memory unit. Each PGW of the plurality of PGWs may be disposed in a network having a different Autonomous System number (ASN), and a same IP (Internet Protocol) address may be assigned to each PGW. The SGW may include a request transmission unit that transmits a session creation request of a communication terminal requesting creation of a session to a Packet Data Network (PDN), to a PGW selected as a transmission destination of the session creation request from among the plurality of PGWs based on a predetermined PGW selection condition. The PGW selected as the transmission destination of the session creation request may include a request reception unit that receives the session creation request, a session information creation unit that creates session information of the communication terminal including an IP address of the communication terminal, the IP address of the PGW, a Tunnel Endpoint Identifier (TEID) assigned to a communication tunnel of each PGW, an IP address of the SGW, and a TEID assigned to a communication tunnel of the SGW, in response to the request reception unit receiving the session creation request, a registration unit that registers the session information created by the session information creation unit in the memory unit, and a response transmission unit that transmits, to the SGW, a session creation response for the communication terminal in response to the session information creation unit creating the session information. The SGW may further include a response reception unit that receives the session creation response, and a data transmission unit that transmits, after the response reception unit receives the session creation response, uplink data of the communication terminal to a PGW selected as a transmission destination of the uplink data from among the plurality of PGWs based on the PGW selection condition. The PGW selected as the transmission destination of the uplink data may include a first data reception unit that receives the uplink data, and a first session information acquisition unit that acquires the session information from the memory unit when the first data reception unit receives the uplink data and when the PGW does not hold the session information.

In the system, the PGW selected as the transmission destination of the uplink data may be a same PGW as the PGW selected as the transmission destination of the session creation request.

In any of the systems, the PGW selected as the transmission destination of the uplink data may be a PGW different from the PGW selected as the transmission destination of the session creation request.

In any of the systems, the PGW selected as the transmission destination of the session creation request may be disposed in the network of a first country, and the PGW selected as the transmission destination of the uplink data may be disposed in the network of a second country different from the first country.

In any of the systems, the first session information acquisition unit may acquire the session information from the memory unit when the first data reception unit receives the uplink data for a first time.

In any of the systems, the PGW that is a transmission destination of downlink data of the communication terminal among the plurality of PGWs may include a second data reception unit that receives the downlink data, and a second session information acquisition unit that acquires the session information from the memory unit when the second data reception unit receives the downlink data and when the PGW does not hold the session information.

In any of the systems, the SGW may be separated into an SGW-Control plane function (SGW-C) and an SGW-User plane function (SGW-U), each PGW of the plurality of PGWs may be separated into a PGW-Control plane function (PGW-C) and a PGW-User plane function (PGW-U), a same IP address may be assigned to each PGW-C, and a same IP address may be assigned to each PGW-U, the IP address of the PGW may include the IP address of the PGW-C and the IP address of the PGW-U different from the IP address of the PGW-C, the TEID assigned to the communication tunnel of each PGW may include a TEID assigned to a communication tunnel of each PGW-C and a TEID assigned to a communication tunnel of each PGW-U and different from the TEID assigned to the communication tunnel of each PGW-C, the IP address of the SGW may include an IP address of the SGW-C and an IP address of the SGW-U different from the IP address of the SGW-C, and the TEID assigned to the communication tunnel of the SGW may include a TEID assigned to a communication tunnel of the SGW-C and a TEID assigned to a communication tunnel of the SGW-U and different from the TEID assigned to the communication tunnel of the SGW-C.

In any of the systems, the memory unit may be disposed on a cloud, and each PGW of the plurality of PGWs may be capable of accessing the memory unit.

According to one embodiment of the present invention, a system is provided. The system may include a Visited Session Management Function (V-SMF). The system may include a Visited User Plane Function (V-UPF) disposed in a network in which the V-SMF is disposed. The system may include a plurality of Home Session Management Functions (H-SMFs). The system may include a plurality of Home User Plane Functions (H-UPFs). The system may include a memory unit. Each H-SMF of the plurality of H-SMFs may be disposed in a network having a different ASN, and a same IP address may be assigned to each H-SMF. Each H-UPF of the plurality of H-UPFs may be disposed in a network having a different ASN, and a same IP address may be assigned to each H-UPF. The V-SMF may include a request transmission unit that transmits a session creation request of a communication terminal requesting creation of a session to a PDN, to an H-SMF selected as a transmission destination of the session creation request from among the plurality of H-SMFs based on a predetermined H-SMF selection condition. The H-SMF selected as the transmission destination of the session creation request may include a request reception unit that receives the session creation request, a session information creation unit that creates session information of the communication terminal including an IP address of the communication terminal, the IP address of the H-SMF, the IP address of the H-UPF different from the IP address of the H-SMF, a TEID assigned to a communication tunnel of each H-SMF, a TEID assigned to a communication tunnel of each H-UPF and different from the TEID assigned to the communication tunnel of each H-SMF, an IP address of the V-SMF, an IP address of the V-UPF different from the IP address of the V-SMF, a TEID assigned to a communication tunnel of the V-SMF, and a TEID assigned to a communication tunnel of the V-UPF and different from the TEID assigned to the communication tunnel of the V-SMF, in response to the request reception unit receiving the session creation request, a registration unit that registers the session information created by the session information creation unit in the memory unit, and a response transmission unit that transmits, to the V-SMF, a session creation response for the communication terminal in response to the session information creation unit creating the session information,. The V-SMF may further include a response reception unit that receives the session creation response. The V-UPF may include a data transmission unit that transmits, after the V-SMF receives the session creation response, uplink data of the communication terminal to an H-UPF selected as a transmission destination of the uplink data from among the plurality of H-UPFs based on a predetermined H-UPF selection condition. The H-UPF selected as the transmission destination of the uplink data may include a data reception unit that receives the uplink data, and a session information acquisition unit that acquires the session information from the memory unit when the data reception unit receives the uplink data and when the H-UPF does not hold the session information.

According to one embodiment of the present invention, provided is a method executed by a system including an SGW, a plurality of PGWs, and a memory unit, in which each PGW of the plurality of PGWs is disposed in a network having a different ASN and a same IP address is assigned to each PGW. The method may include transmitting a request by the SGW transmitting a session creation request of a communication terminal requesting creation of a session to a PDN, to a PGW selected as a transmission destination of the session creation request from among the plurality of PGWs based on a predetermined PGW selection condition. The method may include receiving a request by the PGW selected as the transmission destination of the session creation request receiving the session creation request. The method may include creating, by the PGW selected as the transmission destination of the session creation request, session information of the communication terminal including an IP address of the communication terminal, the IP address of the PGW, a TEID assigned to a communication tunnel of each PGW, an IP address of the SGW, and a TEID assigned to a communication tunnel of the SGW, in response to the session creation request being received in the receiving the request. The method may include registering, by the PGW selected as the transmission destination of the session creation request, the session information created in the creating the session information in the memory unit. The method may include transmitting a response by the PGW selected as the transmission destination of the session creation request transmitting, to the SGW, a session creation response for the communication terminal in response to the session information being created in the creating the session information. The method may include receiving the response by the SGW receiving the session creation response. The method may include transmitting data by the SGW transmitting, after the session creation response is received in the receiving the response, uplink data of the communication terminal to a PGW selected as a transmission destination of the uplink data from among the plurality of PGWs based on the PGW selection condition. The method may include receiving the data by the PGW selected as the transmission destination of the uplink data receiving the uplink data. The method may include acquiring the session information by the PGW selected as the transmission destination of the uplink data acquiring the session information from the memory unit when the uplink data is received in the receiving the data and when the PGW does not hold the session information.

According to one embodiment of the present invention, provided is a method executed by a system including a V-SMF, a V-UPF disposed in a network in which the V-SMF is disposed, a plurality of H-SMFs, a plurality of H-UPFs, and a memory unit, in which each H-SMF of the plurality of H-SMFs is disposed in a network having a different ASN and a same IP address is assigned to each H-SMF, and each H-UPF of the plurality of H-UPFs is disposed in a network having a different ASN and a same IP address is assigned to each H-UPF. The method may include transmitting a request by the V-SMF transmitting a session creation request of a communication terminal requesting creation of a session to a PDN, to an H-SMF selected as a transmission destination of the session creation request from among the plurality of H-SMFs based on a predetermined H-SMF selection condition. The method may include receiving the request by the H-SMF selected as the transmission destination of the session creation request receiving the session creation request. The method may include creating, by the H-SMF selected as the transmission destination of the session creation request, session information of the communication terminal including an IP address of the communication terminal, the IP address of the H-SMF, the IP address of the H-UPF different from the IP address of the H-SMF, a TEID assigned to a communication tunnel of each H-SMF, a TEID assigned to a communication tunnel of each H-UPF and different from the TEID assigned to the communication tunnel of each H-SMF, an IP address of the V-SMF, an IP address of the V-UPF different from the IP address of the V-SMF, a TEID assigned to a communication tunnel of the V-SMF, and a TEID assigned to a communication tunnel of the V-UPF and different from the TEID assigned to the communication tunnel of the V-SMF, in response to the session creation request being received in the receiving the request. The method may include registering, by the H-SMF selected as the transmission destination of the session creation request, the session information created in the creating the session information, in the memory unit. The method may include transmitting a response by transmitting, by the H-SMF selected as the transmission destination of the session creation request, to the V-SMF, a session creation response for the communication terminal in response to the session information being created in the creating the session information. The method may include receiving the response by the V-SMF receiving the session creation response. The method may include transmitting data by the V-UPF transmitting, after the V-SMF receives the session creation response in the receiving the response, uplink data of the communication terminal to an H-UPF selected as a transmission destination of the uplink data from among the plurality of H-UPFs based on a predetermined H-UPF selection condition. The method may include receiving the data by the H-UPF selected as the transmission destination of the uplink data receiving the uplink data. The method may include acquiring, by the H-UPF selected as the transmission destination of the uplink data, the session information from the memory unit when the uplink data is received in the receiving the data and when the H-UPF does not hold the session information.

The summary clause does not necessarily describe all necessary features of the embodiments of the present invention. The present invention may also be a sub-combination of the features described above.

### BRIEF DESCRIPTION OF THE DRAWINGS

FIG. 1 is a diagram schematically illustrating an example of a system 10.
FIG. 2 is an explanatory diagram for explaining an example of a processing flow of the system 10.
FIG. 3 schematically illustrates another example of the system 10.
FIG. 4 schematically illustrates another example of the system 10.
FIG. 5 is an explanatory diagram for explaining another example of the processing flow of the system 10.
FIG. 6 schematically illustrates an example of a functional configuration of a PGW 100.
FIG. 7 schematically illustrates an example of a functional configuration of an SGW 300.
FIG. 8 schematically illustrates another example of the system 10.
FIG. 9 is an explanatory diagram for explaining another example of the processing flow of the system 10.
FIG. 10 schematically illustrates another example of the system 10.
FIG. 11 schematically illustrates another example of the system 10.
FIG. 12 is an explanatory diagram for explaining another example of the processing flow of the system 10.
FIG. 13 schematically illustrates an example of a functional configuration of an H-SMF 420.
FIG. 14 schematically illustrates an example of a functional configuration of an H-UPF 440.
FIG. 15 schematically illustrates an example of a functional configuration of a V-SMF 620.
FIG. 16 schematically illustrates an example of a functional configuration of a V-UPF 640.
FIG. 17 schematically illustrates an example of a hardware configuration of a computer 1200 that functions as the PGW 100, the SGW 300, the H-SMF 420, the H-UPF 440, the V-SMF 620, or the V-UPF 640.

### DESCRIPTION OF EXEMPLARY EMBODIMENTS

When communication is performed by a Home Routed method in international roaming, in the case of Long Term Evolution (LTE) communication, session creation and creation of a GPRS Tunneling Protocol (GTP) tunnel are performed from an SGW on a Visited Public Land Mobile Network (VPLMN) side to a specific PGW on a Home Public Land Mobile Network (HPLMN) side. The system according to the present embodiment employs a mechanism in which, for example, a same IP address is assigned to each of PGWs of a plurality of geographically different HPLMNs by using IP Anycast, and a PGW on the HPLMN side that is present at a site selected by a best path selection algorithm of Border Gateway Protocol (BGP) acquires session information with reception, from the SGW, of a first packet of a communication terminal as a trigger and processes a packet of the communication terminal. By adopting a configuration in which only the PGW on the HPLMN side that is present at the site selected by the best path selection algorithm acquires session information, it becomes unnecessary for a PGW on an HPLMN side that is present at another site to acquire the session information, and as a result, consumption of resources can be suppressed in the system as a whole.

Hereinafter, the invention will be described through embodiments of the invention, but the following embodiments do not limit the invention according to claims. In addition, not all of the combinations of features described in the embodiments are essential to the solving means of the invention.

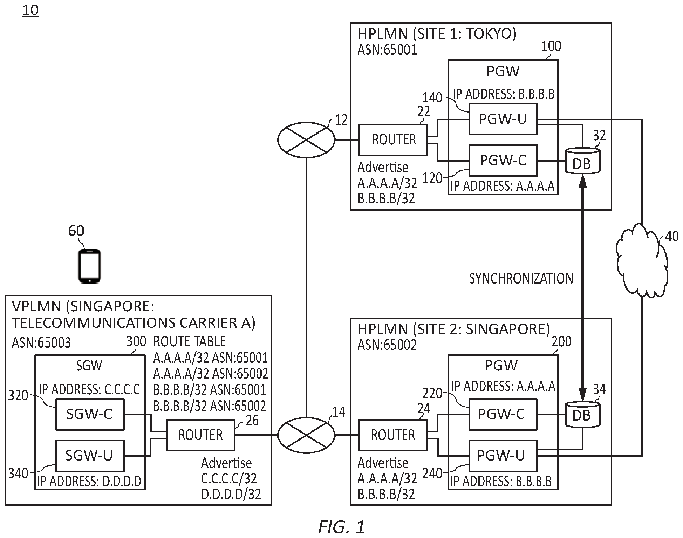

FIG. 1 schematically illustrates an example of a system 10. The system 10 provides a mobile communication service to a user of a communication terminal 60. The system 10 provides, for example, a roaming service to the user of the communication terminal 60.

The roaming service includes, for example, an international roaming service. The roaming service includes, for example, a domestic roaming service.

The communication terminal 60 may be any communication terminal as long as the communication terminal 60 can use the mobile communication service provided by the system 10. For example, the communication terminal 60 is a mobile phone such as a smartphone, a tablet terminal, a wearable terminal, or the like.

The mobile communication service provided by the system 10 is, for example, an LTE communication service. The mobile communication service provided by the system 10 is, for example, a 5th Generation (5G) communication service. The mobile communication service provided by the system 10 may be a 6th Generation (6G) communication service. The mobile communication service provided by the system 10 may be a 3rd Generation (3G) communication service. In FIG. 1, an example in which the mobile communication service provided by the system 10 is the LTE communication service is illustrated.

The system 10 may include a plurality of PGWs. In FIG. 1, an example in which the system 10 includes two PGWs of a PGW 100 and a PGW 200 is illustrated. The number of PGWs included in the system 10 is not limited to two, and may be three or more. The system 10 may include an SGW 300.

The system 10 may include a router 22. The system 10 may include a database 32. The system 10 may include a router 24. The system 10 may include a database 34. The system 10 may include a router 26.

Each PGW of the plurality of PGWs is disposed, for example, in a network having a different ASN, and a same IP address is assigned to each PGW. For example, IP Anycast is used to assign the same IP address to each PGW.

For example, when a Control and User Plane Separation (CUPS) architecture is introduced into an LTE communication system, each PGW of the plurality of PGWs is separated into a PGW-C and a PGW-U. In this case, a same IP address is assigned to each PGW-C, and a same IP address is assigned to each PGW-U. Here, respective configurations of the PGW 100 and the PGW 200 illustrated in FIG. 1 will be described.

The PGW 100 has a function of relaying access to a PDN 40. The PGW 100 is disposed, for example, in an HPLMN that is a network of a telecommunications carrier that has issued a Subscriber Identity Module (SIM) card to the user of the communication terminal 60.

The PDN 40 includes, for example, the Internet. The PDN 40 may include any private network.

The PGW 100 is disposed, for example, in a network of a first country. In one example of the system 10 illustrated in FIG. 1, the PGW 100 is disposed in a network in Tokyo, Japan, whose ASN is 65001.

As in one example of the system 10 illustrated in FIG. 1, the PGW 100 may be separated into a PGW-C 120 and a PGW-U 140. The PGW 100 may not be separated into the PGW-C 120 and the PGW-U 140.

An IP address may be assigned to the PGW 100. In one example of the system 10 illustrated in FIG. 1, an IP address A.A.A.A with a subnet mask 32 is assigned to the PGW-C 120, and B.B.B.B with the subnet mask 32 is assigned to the PGW-U 140.

The PGW 200 has a function of relaying access to the PDN 40. The PGW 200 may have functions similar to those of the PGW 100.

The PGW 200 is disposed, for example, in an HPLMN of a telecommunications carrier that has issued a SIM card to the user of the communication terminal 60. Here, description will be continued on the assumption that subscriber information of the user of the communication terminal 60, which is used to authenticate the user of the communication terminal 60 and is recorded in the SIM card, such as an International Mobile Subscriber Identity (IMSI) and an International Mobile Equipment Identity (IMEI), is synchronized in advance between the HPLMN in which the PGW 100 is disposed and the HPLMN in which the PGW 200 is disposed.

The PGW 200 is disposed, for example, in a network having an ASN different from the ASN of the network in which the PGW 100 is disposed. The PGW 200 is disposed, for example, in a network of a second country different from the first country. In one example of the system 10 illustrated in FIG. 1, the PGW 200 is disposed in a network in Singapore, whose ASN is 65002.

The PGW 200 may be disposed in the network of the first country. For example, when the PGW 100 is disposed in a network in Tokyo, Japan, the PGW 200 may be disposed in a network in Osaka, Japan.

As in one example of the system 10 illustrated in FIG. 1, the PGW 200 may be separated into a PGW-C 220 and a PGW-U 240. The PGW 200 may not be separated into the PGW-C 220 and the PGW-U 240.

An IP address may be assigned to the PGW 200. In one example of the system 10 illustrated in FIG. 1, the IP address A.A.A.A with the subnet mask 32 is assigned to the PGW-C 220, and B.B.B.B with the subnet mask 32 is assigned to the PGW-U 240.

The SGW 300 has a function of relaying access from a radio access network. The SGW 300 is disposed, for example, in a VPLMN that is a network of a telecommunications carrier at a visited destination of the user of the communication terminal 60. The telecommunications carrier that has issued a SIM card to the user of the communication terminal 60 may have previously formed a business alliance with the telecommunications carrier at the visited destination of the user of the communication terminal 60. In one example of the system 10 illustrated in FIG. 1, the SGW 300 is disposed in a network of a telecommunications carrier A in Singapore, whose ASN is 65003.

As in one example of the system 10 illustrated in FIG. 1, when a CUPS architecture is introduced into an LTE communication system, the SGW 300 may be separated into an SGW-C 320 and an SGW-U 340. The SGW 300 may not be separated into the SGW-C 320 and the SGW-U 340.

An IP address may be assigned to the SGW 300. In one example of the system 10 illustrated in FIG. 1, an IP address C.C.C.C with the subnet mask 32 is assigned to the SGW-C 320, and D.D.D.D with the subnet mask 32 is assigned to the SGW-U 340.

The router 22 has a function of relaying data. The router 22 relays, for example, uplink data. The router 22 relays, for example, downlink data.

The router 22 is disposed, for example, in the HPLMN in which the PGW 100 is disposed. The router 22 may be separated from the PGW 100, or may be integrated with the PGW 100.

The router 24 has a function of relaying data. The router 24 has a function similar to that of the router 22.

The router 24 is disposed, for example, in the HPLMN in which the PGW 200 is disposed. The router 24 may be separated from the PGW 200, or may be integrated with the PGW 200.

The router 26 has a function of relaying data. The router 26 relays, for example, uplink data. The router 26 relays, for example, downlink data.

The router 26 is disposed, for example, in the VPLMN in which the SGW 300 is disposed. The router 26 may be separated from the SGW 300, or may be integrated with the SGW 300.

For example, inter-organizational route information is exchanged among the router 22, the router 24, and the router 26 in accordance with BGP. For example, in response to a change in route information, the route information is exchanged among the router 22, the router 24, and the router 26. The route information may be periodically exchanged among the router 22, the router 24, and the router 26.

The route information includes, for example, an ASN of a network in which a router is disposed. The route information includes, for example, an IP address assigned to an apparatus disposed in the network. The route information may include a subnet mask of the IP address assigned to the apparatus disposed in the network. The subnet mask is expressed, for example, in prefix notation.

The router 22 advertises the route information toward, for example, the router 26. The router 22 may advertise the route information toward an IP eXchange (IPX) that relays between an HPLMN and a VPLMN. The router 24 may advertise the route information in a manner similar to the router 22.

In one example of the system 10 illustrated in FIG. 1, the router 22 advertises ASN = 65001, IP address of PGW-C 120 = A.A.A.A/32, and IP address of PGW-U 140 = B.B.B.B/32. In one example of the system 10 illustrated in FIG. 1, the router 24 advertises ASN = 65002, IP address of PGW-C 220 = A.A.A.A/32, and IP address of PGW-U 240 = B.B.B.B/32.

The router 26 advertises the route information toward, for example, the router 22 and the router 24. The router 22 may advertise the route information toward the IPX. In one example of the system 10 illustrated in FIG. 1, the router 26 advertises ASN = 65003, IP address of SGW-C 320 = C.C.C.C/32, and IP address of SGW-U 340 = D.D.D.D/32.

The router 26 generates, for example, a route table. The router 26 generates, for example, the route table based on the route information advertised by each of the router 22 and the router 24. The router 26 generates, for example, the route table by associating an ASN of a network in which a router is disposed with an IP address assigned to an apparatus disposed in the network. In one example of the system 10 illustrated in FIG. 1, the router 26 generates the route table including ASN = 65001 and IP address of PGW-C 120 = A.A.A.A/32, ASN = 65001 and IP address of PGW-U 140 = B.B.B.B/32, ASN = 65002 and IP address of PGW-C 220 = A.A.A.A/32, and ASN = 65002 and IP address of PGW-U 240 = B.B.B.B/32.

The SGW 300 receives, for example, a session creation request of the communication terminal 60 of a user who has visited the VPLMN, the session creation request requesting creation of a session to the PDN 40. The session creation request includes, for example, an IP address of the communication terminal 60. The session creation request includes, for example, an IMSI of the communication terminal 60. The session creation request includes, for example, an Access Point Name (APN) of the communication terminal 60. The session creation request includes, for example, an IP address of the SGW 300. For example, when the SGW 300 is separated into the SGW-C 320 and the SGW-U 340, the IP address of the SGW 300 includes an IP address of the SGW-C 320 and an IP address of the SGW-U 340 that is different from the IP address of SGW-C 320. The session creation request includes, for example, a TEID assigned to a communication tunnel of the SGW 300. For example, when the SGW 300 is separated into the SGW-C 320 and the SGW-U 340, the TEID assigned to the communication tunnel of the SGW 300 includes a TEID assigned to a communication tunnel of the SGW-C 320 and a TEID that is assigned to a communication tunnel of the SGW-U 340 and is different from the TEID assigned to the communication tunnel of the SGW-C 320. When the SGW 300 is not separated into the SGW-C 320 and the SGW-U 340, a TEID assigned to a communication tunnel of a User-Plane (U-Plane) function of the SGW 300 may be the same as, or may be different from, a TEID assigned to a communication tunnel of the Control-Plane (C-Plane) function of the SGW 300. The session creation request includes, for example, an IP address of a PGW included in the system 10. For example, when each PGW of a plurality of PGWs included in the system 10 is separated into a PGW-C and a PGW-U, the IP address of the PGW included in the system 10 includes an IP address of the PGW-C and an IP address of the PGW-U that is different from the IP address of the PGW-C. The session creation request may include any other information for creating the session to the PDN 40 for the communication terminal 60.

The SGW 300 may transmit, using the router 26, the received session creation request of the communication terminal 60. The router 26 may select, based on a predetermined PGW selection condition, a PGW that is a transmission destination of the session creation request of the communication terminal 60 from among the plurality of PGWs included in the system 10.

The router 26 selects, for example, as the PGW that is the transmission destination of the session creation request of the communication terminal 60, a PGW having a route with a shortest distance to the SGW 300 from among the plurality of PGWs included in the system 10. For example, when there are a plurality of PGWs to which a same IP address is assigned, the router 26 selects, based on the generated route table and in accordance with a BGP best path selection algorithm, as the PGW that is the transmission destination of the session creation request of the communication terminal 60, a PGW having a route with a shortest distance to the SGW 300 from among the plurality of PGWs to which the same IP address is assigned.

In one example of the system 10 illustrated in FIG. 1, a route from the PGW 100 to the SGW 300 passes through a network 12 constructed in Tokyo and a network 14 constructed in Singapore. In contrast, a route from the PGW 200 to the SGW 300 passes through only the network 14. Therefore, in one example of the system 10 illustrated in FIG. 1, when the SGW 300 is in a state in which the SGW 300 can transmit the session creation request of the communication terminal 60 to both the PGW 100 and the PGW 200 by using the router 26, since a distance of the route from the PGW 200 to the SGW 300 is shorter than a distance of the route from the PGW 100 to the SGW 300, the router 26 selects the PGW 200 from among the PGW 100 and the PGW 200 as the PGW that is the transmission destination of the session creation request of the communication terminal 60. Here, description will be continued assuming that the router 26 has selected the PGW 200 as the PGW that is the transmission destination of the session creation request of the communication terminal 60.

The SGW 300 may transmit, using the router 26, the session creation request of the communication terminal 60 to the PGW 200 via the network 14. The PGW 200 may receive, using the router 24, the session creation request of the communication terminal 60 via the network 14. The PGW 200 may be an example of the PGW selected as the transmission destination of the session creation request of the communication terminal 60.

The PGW 200 may create session information of the communication terminal 60 in response to receiving the session creation request of the communication terminal 60 from the SGW 300. The session information includes, for example, the IP address of the communication terminal 60. The session information includes, for example, the IMSI of the communication terminal 60. The session information includes, for example, the IP address of the PGW included in the system 10. The session information includes, for example, the TEID assigned to the communication tunnel of each PGW of the plurality of PGWs included in the system 10. For example, when each PGW is separated into the PGW-C and the PGW-U, the TEID assigned to the communication tunnel of each PGW includes the TEID assigned to the communication tunnel of each PGW-C and the TEID that is assigned to the communication tunnel of each PGW-U and is different from the TEID assigned to the communication tunnel of each PGW-C. When each PGW is not separated into the PGW-C and the PGW-U, the TEID assigned to the communication tunnel of the U-Plane function of each PGW may be the same as, or may be different from, the TEID assigned to the communication tunnel of the C-Plane function of each PGW. The session information includes, for example, the IP address of the SGW 300. The session information includes, for example, the TEID assigned to the communication tunnel of the SGW 300. The session information may include any other information for creating the session to the PDN 40 for the communication terminal 60.

The PGW 200 may register the created session information of the communication terminal 60 in the database 34 corresponding to the PGW 200. The PGW 200 may store, for example, an IP address of the database 34 in advance.

The database 34 includes, for example, a message queue that temporarily stores the session information of the communication terminal 60. The database 34 may be an example of a memory unit.

The database 34 may be separated from the PGW 200. The database 34 may be integrated with the PGW 200.

The database 34 is disposed, for example, in a network in which the PGW 200 is disposed. The database 34 may be disposed in a network having an ASN different from an ASN of the network in which the PGW 200 is disposed.

The database 34 may synchronize the registered session information of the communication terminal 60 between the database 34 and the database 32 corresponding to the PGW 100. The database 32 may be an example of the memory unit.

The database 34 synchronizes, for example, the session information of the communication terminal 60 between the database 34 and the database 32 by using a Publish/Subscribe (Pub/Sub) method. In this case, the database 34 may be a publisher, and the database 32 may be a subscriber.

For example, the database 34 transmits a message including the session information of the communication terminal 60 to a topic. The database 32 acquires the session information of the communication terminal 60 by receiving a message from a subscription corresponding to the topic to which the message has been transmitted by the database 34. Thus, the session information of the communication terminal 60 is synchronized between the database 34 and the database 32.

The database 32 may be separated from the PGW 100. The database 32 may be integrated with the PGW 100.

The database 32 is disposed, for example, in a network in which the PGW 100 is disposed. The database 32 may be disposed in a network having an ASN different from an ASN of the network in which the PGW 100 is disposed.

In response to creating the session information of the communication terminal 60, the PGW 200 may transmit, to the SGW 300, a session creation response for the communication terminal 60 to the session creation request of the communication terminal 60 via the network 14 by using the router 24. The session creation response includes, for example, the IP address of the PGW included in the system 10. The session creation response includes, for example, the TEID assigned to the communication tunnel of each PGW of the plurality of PGWs included in the system 10. The session creation response may include any other information for creating the session to the PDN 40 for the communication terminal 60.

The SGW 300 may receive, using the router 26, the session creation response for the communication terminal 60 via the network 14. Thus, the SGW 300 can create, based on the session creation response for the communication terminal 60, the session to the PDN 40 for the communication terminal 60.

Thereafter, the SGW 300 may receive, from the communication terminal 60, uplink data of the communication terminal 60. The SGW 300 may transmit, using the router 26, the received uplink data of the communication terminal 60.

The router 26, for example, selects, based on the PGW selection condition, a PGW that is a transmission destination of the uplink data of the communication terminal 60 from among the plurality of PGWs included in the system 10. The router 26, for example, when there are a plurality of PGWs to which a same IP address is assigned, selects, based on the generated route table, in accordance with the BGP best path selection algorithm, as the PGW that is the transmission destination of the uplink data of the communication terminal 60, a PGW having a route with a shortest distance to the SGW 300 from among the plurality of PGWs to which the same IP address is assigned.

In one example of the system 10 illustrated in FIG. 1, when the SGW 300 is in a state in which the SGW 300 can transmit the uplink data of the communication terminal 60 to both the PGW 100 and the PGW 200 by using the router 26, the router 26 selects the PGW 200 from among the PGW 100 and the PGW 200 as the PGW that is the transmission destination of the uplink data of the communication terminal 60. Here, description will be continued assuming that the router 26 has selected the PGW 200 as the PGW that is the transmission destination of the uplink data of the communication terminal 60.

The SGW 300 may transmit, using the router 26, the uplink data of the communication terminal 60 to the PGW 200 via the network 14. The PGW 200 may receive, using the router 24, the uplink data of the communication terminal 60 via the network 14. The PGW 200 may be an example of the PGW selected as the transmission destination of the uplink data of the communication terminal 60.

When the PGW 200 receives the uplink data of the communication terminal 60 and does not hold the session information of the communication terminal 60, the PGW 200 acquires the session information of the communication terminal 60 from the database 34, and processes data of the communication terminal 60 based on the session information of the communication terminal 60 acquired from the database 34. On the other hand, when the PGW 200 receives the uplink data of the communication terminal 60 and holds the session information of the communication terminal 60, the PGW 200 processes the data of the communication terminal 60 based on the held session information of the communication terminal 60.

For example, the PGW 200 processes the data of the communication terminal 60 by transmitting the uplink data of the communication terminal 60 to the PDN 40. The PGW 200 may process the data of the communication terminal 60 by transmitting, to the communication terminal 60, the downlink data of the communication terminal 60 received via the PDN 40.

For example, when a state of at least one PGW of the plurality of PGWs included in the system 10 changes, such as when a failure occurs in one PGW of the plurality of PGWs included in the system 10 or when maintenance of the one PGW is started, the router 26 updates the route table. The router 26 may select, based on the updated route table, in accordance with the BGP best path selection algorithm, the PGW that is the transmission destination of the uplink data of the communication terminal 60 from among the plurality of PGWs included in the system 10.

In one example of the system 10 illustrated in FIG. 1, when the SGW 300 is transmitting the uplink data of the communication terminal 60 to the PGW 200 by using the router 26, and when a state in which the SGW 300 can transmit the uplink data of the communication terminal 60 to both the PGW 100 and the PGW 200 by using the router 26 changes to a state in which the SGW 300 can transmit the uplink data of the communication terminal 60 only to the PGW 100 by using the router 26, the router 26 may update the route table. Thereafter, the router 26 may select the PGW 100 as the PGW that is the transmission destination of the uplink data of the communication terminal 60, based on the updated route table.

The SGW 300 may transmit, using the router 26, the uplink data of the communication terminal 60 to the PGW 100 via the network 14 and the network 12. The PGW 100 may receive, using the router 22, the uplink data of the communication terminal 60 via the network 14 and the network 12. The PGW 100 may be an example of the PGW selected as the transmission destination of the uplink data of the communication terminal 60.

When the PGW 100 receives the uplink data of the communication terminal 60 and does not hold the session information of the communication terminal 60, the PGW 100 acquires, from the database 32, the session information of the communication terminal 60 synchronized between the database 32 and the database 34, and processes the data of the communication terminal 60 based on the session information of the communication terminal 60 acquired from the database 32. On the other hand, when the PGW 100 receives the uplink data of the communication terminal 60 and holds the session information of the communication terminal 60, the PGW 100 processes the data of the communication terminal 60 based on the held session information of the communication terminal 60.

In one example of the system 10 illustrated in FIG. 1, when the data of the communication terminal 60 is communicated on a route between the communication terminal 60 and the PDN 40 via the SGW 300 and the PGW 200, the data of the communication terminal 60 is communicated by domestic roaming. On the other hand, in one example of the system 10 illustrated in FIG. 1, when the data of the communication terminal 60 is communicated on a route between the communication terminal 60 and the PDN 40 via the SGW 300 and the PGW 100, the data of the communication terminal 60 is communicated by international roaming.

In one example of the system 10 illustrated in FIG. 1, when the SGW 300 is in a state in which the SGW 300 can transmit the session creation request of the communication terminal 60 only to the PGW 100 using the router 26 at a timing at which the SGW 300 transmits the session creation request of the communication terminal 60, the router 26 selects the PGW 100 as the PGW that is the transmission destination of the session creation request of the communication terminal 60. In this case, the SGW 300 may transmit the session creation request of the communication terminal 60 to the PGW 100 by using the router 26 via the network 14 and the network 12. The PGW 100 may receive the session creation request of the communication terminal 60 by using the router 22 via the network 14 and the network 12. The PGW 100 may be an example of the PGW selected as the transmission destination of the session creation request of the communication terminal 60.

The PGW 100 may create session information of the communication terminal 60 in response to receiving the session creation request from the SGW 300. The PGW 100 may register the created session information of the communication terminal 60 in the database 32. The PGW 100 may, for example, store an IP address of the database 32 in advance.

The database 32 may have a function similar to that of the database 34. For example, when the PGW 100 registers the session information of the communication terminal 60 in the database 32, the database 32 synchronizes the session information of the communication terminal 60 between the database 32 and the database 34 in a manner similar to that of the database 34.

In one example of the system 10 illustrated in FIG. 1, the telecommunications carrier that has issued a SIM card to the user of the communication terminal 60 may construct HPLMNs at three or more sites. In this case, a same IP address may be assigned to the PGW of each site of the three or more sites.

Conventionally, different IP addresses have been assigned, using IP Unicast, to respective PGWs of HPLMNs constructed at a plurality of sites by a telecommunications carrier providing a roaming service. Therefore, when a session is created between an SGW of a VPLMN and a PGW of an HPLMN, a Mobility Management Entity (MME) corresponding to the SGW of the VPLMN has had to select one PGW from among a plurality of PGWs of the HPLMNs having the different IP addresses. As a result, when a session is created between an SGW of a VPLMN and a PGW of an HPLMN that is far in distance to the SGW of the VPLMN, there is a possibility that communication delay of a communication terminal may occur. In particular, under a situation in which the telecommunications carrier providing an international roaming service constructs the HPLMNs in the first country and the second country, when a session is created between an SGW of a VPLMN of the second country and a PGW of the HPLMN of the first country, unnecessary international communication is required as compared with a case where a session is created between the SGW of the VPLMN of the second country and a PGW of the HPLMN of the second country, and thus a possibility that communication delay of the communication terminal may occur is further increased.

In contrast, according to the system 10 illustrated in FIG. 1, the same IP address is assigned, using IP Anycast, to each of the PGWs of the HPLMNs constructed at the plurality of sites by the telecommunications carrier providing the roaming service. The SGW 300 of the VPLMN transmits the session creation request of the communication terminal 60 to the PGW selected as the PGW of the HPLMN that is the transmission destination of the session creation request of the communication terminal 60, based on the PGW selection condition, and transmits the uplink data of the communication terminal 60 to the PGW selected as the PGW of the HPLMN that is the transmission destination of the uplink data of the communication terminal 60, based on the PGW selection condition. Thus, since the SGW 300 can preferentially transmit the session creation request of the communication terminal 60 and the uplink data of the communication terminal 60 to a PGW having a short distance to the SGW 300, the system 10 illustrated in FIG. 1 contributes to realization of an LTE communication service in which occurrence of the communication delay of the communication terminal 60 is suppressed. Then, the PGW that has received the session creation request of the communication terminal 60 from SGW 300 creates session information of the communication terminal 60, and registers the created session information of the communication terminal 60 in a database corresponding to the PGW. The database in which the session information of the communication terminal 60 is registered synchronizes the session information of the communication terminal 60 with a database corresponding to another PGW. Thereafter, the PGW that has received the uplink data of the communication terminal 60 from the SGW 300, when not holding the session information of the communication terminal 60, processes the data of the communication terminal 60 based on the session information of the communication terminal 60 acquired from the database corresponding to the PGW, and when holding the session information of the communication terminal 60, processes the data of the communication terminal 60 based on the held session information of the communication terminal 60. As described above, by employing a configuration in which the session information of the communication terminal 60 is acquired from the database with, as a trigger, that the PGW that has received the uplink data of the communication terminal 60 from SGW 300 does not hold the session information of the communication terminal 60, the PGW that does not process the data of the communication terminal 60 no longer needs to acquire the session information of the communication terminal 60. As a result, the system 10 illustrated in FIG. 1 contributes to realization of an LTE communication service in which consumption of communication resources is suppressed.

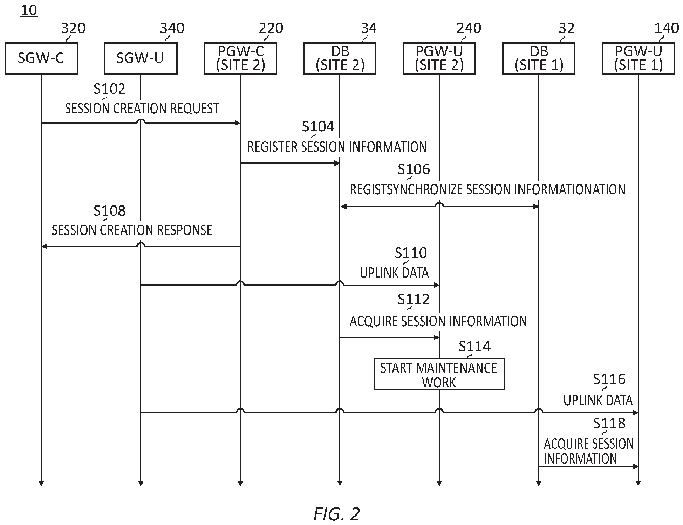

FIG. 2 is the explanatory diagram for explaining an example of a processing flow of the system 10. Here, description will be given with a state in which the user of the communication terminal 60 visits a VPLMN as an initial state.

In step (which may be abbreviated as S) 102, the SGW-C 320 transmits a session creation request of the communication terminal 60 that requests creation of a session to the PDN 40. For example, the SGW-C 320 transmits the session creation request of the communication terminal 60 received from an MME corresponding to the SGW 300 that has accepted an attach request from the communication terminal 60 and has executed authentication processing of the communication terminal 60. Here, description will be continued on the assumption that the SGW-C 320 is in a state in which the SGW-C 320 can transmit the session creation request of the communication terminal 60 to both the PGW-C 120 and the PGW-C 220 by using the router 26, the router 26 selects the PGW-C 220 as a PGW-C that is a transmission destination of the session creation request of the communication terminal 60, based on a predetermined PGW-C selection condition, and the SGW-C 320 transmits the session creation request of the communication terminal 60 to the PGW-C 220 by using the router 26.

The PGW-C 220 receives the session creation request of the communication terminal 60 from the SGW-C 320. The PGW-C 220 may create session information of the communication terminal 60 based on the received session creation request of the communication terminal 60.

In S104, the PGW-C 220 registers the created session information of the communication terminal 60 in the database 34. In S106, the database 34 synchronizes, between the database 34 and the database 32, the session information of the communication terminal 60 registered by the PGW-C 220 in S104.

In S108, the PGW-C 220 transmits, to the SGW-C 320, a session creation response for the communication terminal 60 to the session creation request of the communication terminal 60. The SGW-C 320 receives the session creation response for the communication terminal 60 from the PGW-C 220. The SGW-C 320 may store the received session creation response for the communication terminal 60 such that the SGW-C 320 and the SGW-U 340 can use the session creation response for the communication terminal 60.

In S110, the SGW-U 340 transmits uplink data of the communication terminal 60 based on the session creation response for the communication terminal 60 received by the SGW-C 320 in S108. Here, description will be continued on the assumption that the SGW-U 340 is in a state in which the SGW-U 340 can transmit the uplink data of the communication terminal 60 to both the PGW-U 140 and the PGW-U 240 by using the router 26, the router 26 selects the PGW-U 240 as a PGW-U that is a transmission destination of the uplink data of the communication terminal 60, based on a predetermined PGW-U selection condition, the SGW-U 340 transmits the uplink data of the communication terminal 60 to the PGW-U 240 by using the router 26, and the PGW-U 240 does not hold the session information of the communication terminal 60.

In S112, since the PGW-U 240 does not hold the session information of the communication terminal 60 for processing the uplink data of the communication terminal 60 received in S110, the PGW-U 240 acquires the session information of the communication terminal 60 from the database 34. The PGW-U 240 processes the data of the communication terminal 60 based on the session information of the communication terminal 60 acquired from the database 34.

In S114, maintenance work of the PGW-U 240 is started. The router 26 may update the route table in response to the maintenance work of the PGW-U 240 being started.

In S116, the SGW-U 340 transmits the uplink data of the communication terminal 60 based on the session creation response for the communication terminal 60 received by the SGW-C 320 in S108. Here, description will be continued on the assumption that the SGW-U 340 is in a state in which the SGW-U 340 can transmit the uplink data of the communication terminal 60 only to the PGW-U 140 by using the router 26, the SGW-U 340 transmits the uplink data of the communication terminal 60 to the PGW-U 140 by using the router 26, and the PGW-U 140 does not hold the session information of the communication terminal 60.

In S118, since the PGW-U 140 does not hold the session information of the communication terminal 60 for processing the uplink data of the communication terminal 60 received in S116, the PGW-U 140 acquires, from the database 32, the session information of the communication terminal 60 synchronized between the database 32 and the database 34 in S106. The PGW-U 140 processes the data of the communication terminal 60 based on the session information of the communication terminal 60 acquired from the database 32.

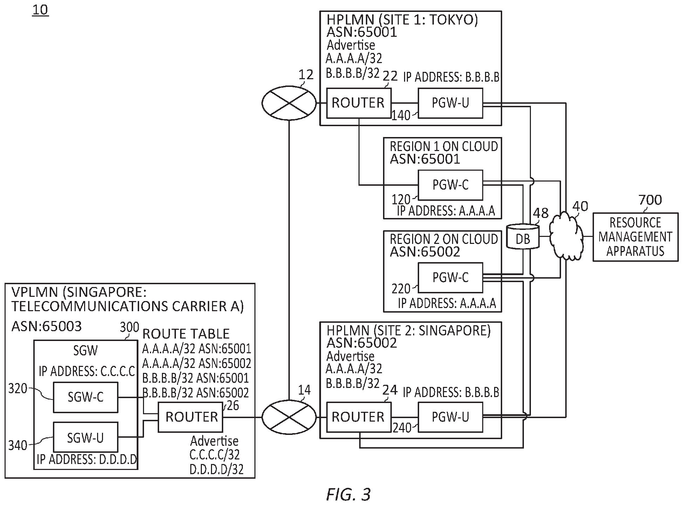

FIG. 3 schematically illustrates another example of the system 10. Here, differences from the system 10 illustrated in FIG. 1 will be mainly described.

The PGW-C 120 may be disposed on a cloud. The PGW-C 120 may be disposed on a same network as the PDN 40, or may be disposed on a network different from the PDN 40. In one example of the system 10 illustrated in FIG. 3, the PGW-C 120 is disposed in region 1 on a cloud whose ASN is 65001.

The PGW-C 220 may be disposed on a cloud. The PGW-C 220 may be disposed on the same network as the PDN 40, or may be disposed on a network different from the PDN 40. In one example of the system 10 illustrated in FIG. 3, the PGW-C 220 is disposed in region 2 on a cloud whose ASN is 65002.

The system 10 may further include a database 48 disposed on a cloud. The database 48 may be disposed on the same network as the PDN 40, or may be disposed on a network different from the PDN 40. The database 48 may be an example of the memory unit.

Each PGW of a plurality of PGWs included in the system 10 may be capable of accessing the database 48. Each PGW accesses the database 48, for example, via the PDN 40. Each PGW may directly access the database 48.

A PGW-C of a PGW selected as a transmission destination of a session creation request of the communication terminal 60 may register created session information of the communication terminal 60 in the database 48. A PGW-U of a PGW selected as a transmission destination of uplink data of the communication terminal 60 may, when the PGW does not hold the session information of the communication terminal 60, acquire the session information of the communication terminal 60 from the database 48, and may process the data of the communication terminal 60 based on the session information of the communication terminal 60 acquired from the database 48.

The system 10 may further include a resource management apparatus 700 that manages physical resources on a cloud. The resource management apparatus 700 manages the physical resources on the cloud, for example, by allocating the physical resources on the cloud to each PGW-C of a plurality of PGW-Cs included in the system 10.

The physical resources include, for example, a Central Processing Unit (CPU). The physical resources include, for example, a memory. The physical resources may include any other components used for processing related to the mobile communication service.

The resource management apparatus 700 determines, for example, a resource amount of physical resources on the cloud to be allocated to each PGW-C based on a load status of each PGW-C. The resource management apparatus 700 determines, for example, the resource amount of physical resources on the cloud to be allocated to each PGW-C so as to allocate a larger amount of resources to a PGW-C that receives a larger number of session creation requests per unit time. The resource management apparatus 700 determines, for example, the resource amount of physical resources on the cloud to be allocated to each PGW-C so as to allocate a larger amount of resources to a PGW-C that has a larger traffic volume per unit time. The resource management apparatus 700 may determine the resource amount of physical resources on the cloud to be allocated to each PGW-C so as to allocate a larger amount of resources to a PGW-C having a slower processing speed.

For example, the resource management apparatus 700 transmits, to each PGW-C, resource amount information indicating the resource amount of physical resources on the cloud to be allocated to each PGW-C. The resource management apparatus 700 transmits, for example, the resource amount information to each PGW-C via the PDN 40.

Each PGW-C may receive the resource amount information from the resource management apparatus 700. Each PGW-C may execute processing related to the mobile communication service by using the physical resources on the cloud allocated by the resource management apparatus 700.

The resource management apparatus 700 changes, for example, the resource amount of physical resources on the cloud to be allocated to each PGW-C, based on a usage status of the physical resources on the cloud. The resource management apparatus 700 changes, for example, the resource amount of physical resources on the cloud to be allocated to each PGW-C, based on a CPU utilization rate on the cloud. The resource management apparatus 700 changes, for example, the resource amount of physical resources on the cloud to be allocated to each PGW-C at a timing when the CPU utilization rate on the cloud exceeds a predetermined CPU utilization rate threshold. The resource management apparatus 700 may change the resource amount of physical resources on the cloud to be allocated to each PGW-C at a timing when the CPU utilization rate on the cloud falls below the predetermined CPU utilization rate threshold. The resource management apparatus 700 may change the resource amount of physical resources on the cloud to be allocated to each PGW-C, based on a memory utilization rate on the cloud. The resource management apparatus 700 changes, for example, the resource amount of physical resources on the cloud to be allocated to each PGW-C at a timing when the memory utilization rate on the cloud exceeds a predetermined memory utilization rate threshold. The resource management apparatus 700 may change the resource amount of physical resources on the cloud to be allocated to each PGW-C at a timing when the memory utilization rate on the cloud falls below the predetermined memory utilization rate threshold. The resource management apparatus 700 may periodically change the resource amount of physical resources on the cloud to be allocated to each PGW-C.

According to the system 10 illustrated in FIG. 3, the session information of the communication terminal 60 is registered in the database 48 disposed on the cloud, and the PGW selected as the transmission destination of the uplink data of the communication terminal 60 acquires the session information of the communication terminal 60 from the database 48 when the PGW does not hold the session information of the communication terminal 60. Then, the PGW selected as the transmission destination of the uplink data of the communication terminal 60 processes the data of the communication terminal 60 based on the session information of the communication terminal 60 acquired from the database 48. By registering the session information of the communication terminal 60 in the database 48 disposed on the cloud, it becomes unnecessary to transmit and receive the session information of the communication terminal 60 between sites of the HPLMNs in order to synchronize the session information of the communication terminal 60 among databases disposed at the respective sites of the HPLMNs. As a result, the system 10 illustrated in FIG. 3 contributes to realization of an LTE communication service in which consumption of communication resources is further suppressed and a risk of information leakage is further reduced.

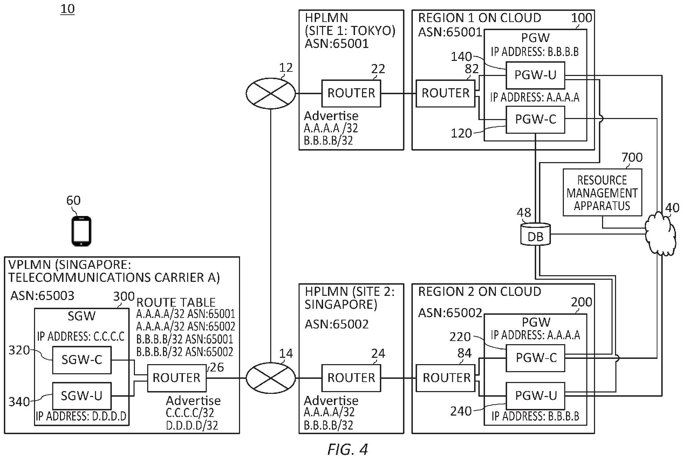

FIG. 4 schematically illustrates another example of the system 10. Here, differences from the system 10 illustrated in FIG. 3 will be mainly described.

The PGW-U 140 may be disposed on a cloud. The PGW-U 140 may be disposed on the same network as the PDN 40, or may be disposed on a network different from the PDN 40. In one example of the system 10 illustrated in FIG. 4, the PGW-U 140 is disposed in region 1 on the cloud whose ASN is 65001.

The PGW-U 240 may be disposed on a cloud. The PGW-U 240 may be disposed on the same network as the PDN 40, or may be disposed on a network different from the PDN 40. In one example of the system 10 illustrated in FIG. 4, the PGW-U 240 is disposed in region 2 on the cloud whose ASN is 65002.

The system 10 may further include a router 82. When the PGW-C 120 is selected, for example, as a transmission destination of the session creation request of the communication terminal 60, the PGW-C 120 receives the session creation request of the communication terminal 60 via the network 14, the network 12, and the router 22 by using the router 82. When the PGW-U 140 is selected, for example, as a transmission destination of the uplink data of the communication terminal 60, the PGW-U 140 receives the uplink data of the communication terminal 60 via the network 14, the network 12, and the router 22 by using the router 82.

The system 10 may further include a router 84. When the PGW-C 220 is selected, for example, as the transmission destination of the session creation request of the communication terminal 60, the PGW-C 220 receives the session creation request of the communication terminal 60 via the network 14 and the router 24 by using the router 84. When the PGW-U 240 is selected, for example, as the transmission destination of the uplink data of the communication terminal 60, the PGW-U 240 receives the uplink data of the communication terminal 60 via the network 14 and the router 24 by using the router 84.

The resource management apparatus 700 manages physical resources on a cloud by, for example, allocating physical resources on the cloud to each PGW-U of a plurality of PGW-Us included in the system 10. The resource management apparatus 700 determines, for example, a resource amount of physical resources on the cloud to be allocated to each PGW-U based on a load status of each PGW-U.

The resource management apparatus 700 determines, for example, the resource amount of physical resources on the cloud to be allocated to each PGW-U so as to allocate a larger resource amount to a PGW-U that receives more uplink data per unit time. The resource management apparatus 700 determines, for example, the resource amount of physical resources on the cloud to be allocated to each PGW-U so as to allocate a larger resource amount to a PGW-U having a larger traffic volume per unit time. The resource management apparatus 700 determines, for example, the resource amount of physical resources on the cloud to be allocated to each PGW-U so as to allocate a larger resource amount to a PGW-U having a larger number of sessions. The resource management apparatus 700 may determine the resource amount of physical resources on the cloud to be allocated to each PGW-U so as to allocate a larger resource amount to a PGW-U having a slower processing speed.

For example, the resource management apparatus 700 transmits, to each PGW-U, resource amount information indicating the resource amount of physical resources on the cloud to be allocated to each PGW-U. The resource management apparatus 700 transmits, for example, the resource amount information to each PGW-U via the PDN 40.

Each PGW-U may receive the resource amount information from the resource management apparatus 700. Each PGW-U may execute processing related to the mobile communication service by using the physical resources on the cloud allocated by resource management apparatus 700.

The resource management apparatus 700 changes, for example, the resource amount of physical resources on the cloud to be allocated to each PGW-U based on a usage status of the physical resources on the cloud. For example, the resource management apparatus 700 changes the resource amount of physical resources on the cloud to be allocated to each PGW-U, based on the usage status of the physical resources on the cloud, in a manner similar to a case of changing the resource amount of physical resources on the cloud to be allocated to each PGW-C based on the usage status of the physical resources on the cloud. The resource management apparatus 700 may periodically change the resource amount of physical resources on the cloud to be allocated to each PGW-U.

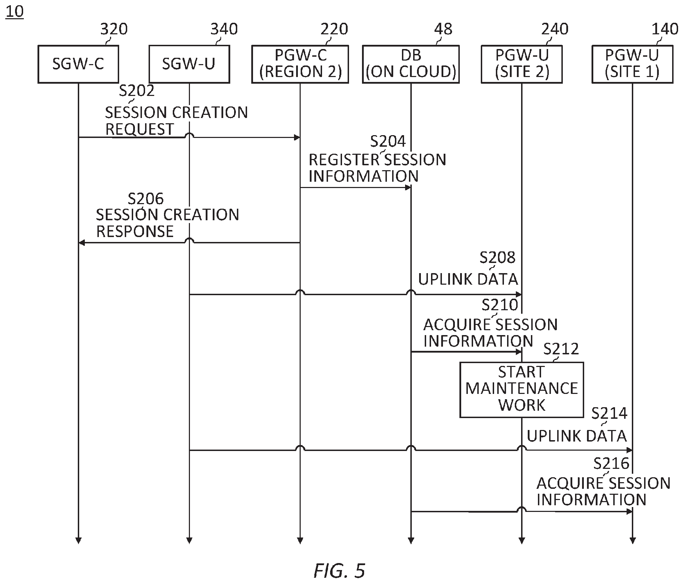

FIG. 5 is an explanatory diagram for explaining another example of the processing flow of the system 10. Here, description is given with a state in which the user of the communication terminal 60 visits a VPLMN as an initial state.

In S202, the SGW-C 320 transmits a session creation request of the communication terminal 60 that requests creation of a session to the PDN 40. Here, description is continued on the assumption that the SGW-C 320 is in a state in which the SGW-C 320 can transmit the session creation request of the communication terminal 60 to both the PGW-C 120 and the PGW-C 220 by using the router 26, the router 26 selects the PGW-C 220 as a PGW-C that is a transmission destination of the session creation request of the communication terminal 60 based on the PGW-C selection condition, and the SGW-C 320 transmits the session creation request of the communication terminal 60 to the PGW-C 220 by using the router 26.

The PGW-C 220 receives the session creation request of the communication terminal 60 from the SGW-C 320. The PGW-C 220 may create session information of the communication terminal 60 based on the received session creation request of the communication terminal 60.

In S204, the PGW-C 220 registers the created session information of the communication terminal 60 in the database 48 disposed on the cloud. In S206, the PGW-C 220 transmits, to the SGW-C 320, a session creation response for the communication terminal 60 to the session creation request of the communication terminal 60. The SGW-C 320 receives the session creation response for the communication terminal 60 from the PGW-C 220.

In S208, the SGW-U 340 transmits uplink data of the communication terminal 60 based on the session creation response for the communication terminal 60 received by the SGW-C 320 in S206. Here, description is continued on the assumption that the SGW-U 340 is in a state in which the SGW-U 340 can transmit the uplink data of the communication terminal 60 to both the PGW-U 140 and the PGW-U 240 by using the router 26, the router 26 selects the PGW-U 240 as a PGW-U that is a transmission destination of the uplink data of the communication terminal 60, based on the PGW-U selection condition, the SGW-U 340 transmits the uplink data of the communication terminal 60 to the PGW-U 240 by using the router 26, and the PGW-U 240 does not hold the session information of the communication terminal 60.

In S210, since PGW-U 240 does not hold the session information of the communication terminal 60 for processing the uplink data of the communication terminal 60 received in S208, PGW-U 240 acquires the session information of the communication terminal 60 from the database 48 disposed on the cloud. The PGW-U 240 processes the data of the communication terminal 60 based on the session information of the communication terminal 60 acquired from the database 48.

In S212, maintenance work of the PGW-U 240 is started. The router 26 may update the route table in response to the maintenance work of the PGW-U 240 being started.

In S214, the SGW-U 340 transmits the uplink data of the communication terminal 60 based on the session creation response for the communication terminal 60 received by the SGW-C 320 in S206. Here, description will be continued on the assumption that the SGW-U 340 is in a state in which the SGW-U 340 can transmit the uplink data of the communication terminal 60 only to the PGW-U 140 by using the router 26, the SGW-U 340 transmits the uplink data of the communication terminal 60 to the PGW-U 140 by using the router 26, and the PGW-U 140 does not hold the session information of the communication terminal 60.

In S216, since the PGW-U 140 does not hold the session information of the communication terminal 60 for processing the uplink data of the communication terminal 60 received in S214, the PGW-U 140 acquires the session information of the communication terminal 60 from the database 48 disposed on the cloud. The PGW-U 140 processes the data of the communication terminal 60 based on the session information of the communication terminal 60 acquired from the database 48.

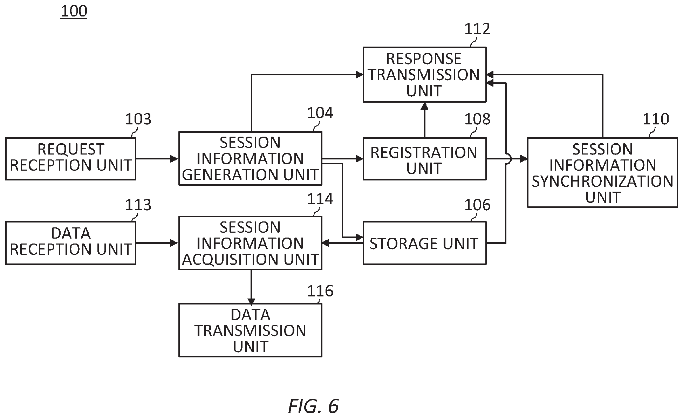

FIG. 6 schematically illustrates an example of a functional configuration of the PGW 100. The PGW 100 includes a request reception unit 103, a session information creation unit 104, a storage unit 106, a registration unit 108, a session information synchronization unit 110, a response transmission unit 112, a data reception unit 113, a session information acquisition unit 114, and a data transmission unit 116. Note that the PGW 100 is not necessarily required to include all of these configurations.

The request reception unit 103 receives a session creation request of the communication terminal 60 requesting creation of a session to the PDN 40. When the PGW 100 is selected as a transmission destination of the session creation request of the communication terminal 60 from among the plurality of PGWs included in the system 10, the request reception unit 103 receives the session creation request of the communication terminal 60.

The request reception unit 103 receives, for example, the session creation request of the communication terminal 60 by using a router. When the PGW 100 includes a router function, the request reception unit 103 may receive the session creation request of the communication terminal 60 by using the router function of the PGW 100.

The session information creation unit 104 creates session information of the communication terminal 60. The session information creation unit 104 creates, for example, the session information of the communication terminal 60 in response to the request reception unit 103 receiving the session creation request of the communication terminal 60. The session information creation unit 104 may store the created session information of the communication terminal 60 in the storage unit 106.

The registration unit 108 registers the session information of the communication terminal 60 created by the session information creation unit 104 in the memory unit. The registration unit 108 registers, for example, the session information of the communication terminal 60 in a database disposed at a site of an HPLMN. The registration unit 108 registers, for example, the session information of the communication terminal 60 in a database disposed on a cloud.

The session information synchronization unit 110 synchronizes the session information of the communication terminal 60 registered, by the registration unit 108, in the database disposed at the site of the HPLMN, between the database and another database disposed at another site of the HPLMN. The session information synchronization unit 110 synchronizes, for example, the session information of the communication terminal 60 between the database and the another database by using the Pub/Sub method. The session information synchronization unit 110 may synchronize the session information of the communication terminal 60 between the database and the another database by using any other method.

The response transmission unit 112 transmits, to the SGW 300, the session creation response for the communication terminal 60 to the session creation request of the communication terminal 60 received by the request reception unit 103. The response transmission unit 112 transmits, for example, the session creation response for the communication terminal 60 to the SGW 300 in response to the session information creation unit 104 creating the session information of the communication terminal 60. The response transmission unit 112 transmits, for example, the session creation response for the communication terminal 60 to the SGW 300 in response to the registration unit 108 registering the session information of the communication terminal 60 in the memory unit. The response transmission unit 112 may transmit the session creation response for the communication terminal 60 to the SGW 300 in response to the session information synchronization unit 110 synchronizing the session information of the communication terminal 60 between the database disposed at the site of the HPLMN and another database disposed at another site of the HPLMN.

The response transmission unit 112 transmits, for example, the session creation response for the communication terminal 60 using a router. When the PGW 100 includes a router function, the response transmission unit 112 may transmit the session creation response for the communication terminal 60 by using the router function of the PGW 100.

The data reception unit 113 receives data of the communication terminal 60. The data reception unit 113 receives, for example, the data of the communication terminal 60 when the PGW 100 is selected as a transmission destination of the data of the communication terminal 60 from among the plurality of PGWs included in the system 10.

The data reception unit 113 receives, for example, uplink data of the communication terminal 60 from the SGW 300. The data reception unit 113 receives, for example, the uplink data of the communication terminal 60 when the PGW 100 is selected as a transmission destination of the uplink data of the communication terminal 60 from among the plurality of PGWs included in the system 10. The data reception unit 113 may be an example of a first data reception unit.

The data reception unit 113 may receive downlink data of the communication terminal 60 from a server disposed in the PDN 40. The data reception unit 113 receives, for example, the downlink data of the communication terminal 60 when the PGW 100 is selected as a transmission destination of the downlink data of the communication terminal 60 from among the plurality of PGWs included in the system 10. In this case, the PDN 40 may be a private network. The data reception unit 113 may be an example of a second data reception unit.

The data reception unit 113 receives, for example, the data of the communication terminal 60 using a router. When the PGW 100 includes a router function, the data reception unit 113 may receive the data of the communication terminal 60 by using the router function of the PGW 100.

The session information acquisition unit 114 acquires the session information of the communication terminal 60. The session information acquisition unit 114 acquires, for example, the session information of the communication terminal 60 when the data reception unit 113 receives the data of the communication terminal 60. The session information acquisition unit 114 acquires, for example, the session information of the communication terminal 60 when the data reception unit 113 receives the uplink data of the communication terminal 60. The session information acquisition unit 114 may acquire the session information of the communication terminal 60 when the data reception unit 113 receives the downlink data of the communication terminal 60.

For example, when the PGW 100 does not hold the session information of the communication terminal 60, the session information acquisition unit 114 acquires the session information of the communication terminal 60 from the memory unit. The session information acquisition unit 114 acquires, for example, the session information of the communication terminal 60 from the memory unit when the data reception unit 113 receives the uplink data of the communication terminal 60 for a first time. The session information acquisition unit 114 may acquire the session information of the communication terminal 60 from the memory unit when the data reception unit 113 receives the downlink data of the communication terminal 60 for a first time. On the other hand, when the PGW 100 holds the session information of the communication terminal 60, the session information acquisition unit 114 acquires the session information of the communication terminal 60 from the storage unit 106.

The session information acquisition unit 114 may be an example of a first session information acquisition unit. The session information acquisition unit 114 may be an example of a second session information acquisition unit.

The data transmission unit 116 transmits the data of the communication terminal 60. The data transmission unit 116 transmits, for example, the data of the communication terminal 60 based on the session information of the communication terminal 60 acquired by the session information acquisition unit 114.

The data transmission unit 116 transmits, for example, the uplink data of the communication terminal 60. The data transmission unit 116 may transmit the downlink data of the communication terminal 60.

The data transmission unit 116 transmits, for example, the data of the communication terminal 60 by using a router. When the PGW 100 has a router function, the data transmission unit 116 may transmit the data of the communication terminal 60 by using the router function of the PGW 100.

When the PGW 100 is separated into the PGW-C 120 and the PGW-U 140, the PGW-C 120 may have the request reception unit 103, the session information creation unit 104, the storage unit 106, the registration unit 108, the session information synchronization unit 110, and the response transmission unit 112, and the PGW-U 140 may have the storage unit 106, the data reception unit 113, the session information acquisition unit 114, and the data transmission unit 116. The PGW-C 120 and the PGW-U 140 may share the storage unit 106, or may individually have the storage units 106.

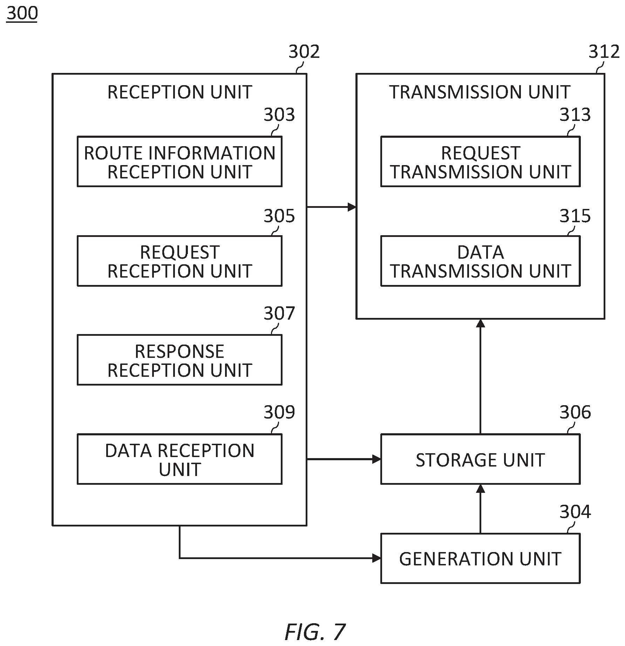

FIG. 7 schematically illustrates an example of a functional configuration of the SGW 300. The SGW 300 includes a reception unit 302, a generation unit 304, a storage unit 306, and a transmission unit 312. The reception unit 302 has a route information reception unit 303, a request reception unit 305, a response reception unit 307, and a data reception unit 309. The transmission unit 312 has a request transmission unit 313 and a data transmission unit 315. It should be noted that it is not necessarily essential that the SGW 300 include all of these configurations.

The reception unit 302 receives various types of information. The reception unit 302 may store the received various types of information in the storage unit 306.

The reception unit 302 receives, for example, various types of information by using a router. When the SGW 300 has a router function, the reception unit 302 may receive various types of information using the router function of the SGW 300.

The route information reception unit 303 receives route information. The route information reception unit 303 receives, for example, the route information from a router. The route information reception unit 303 may receive the route information from an IPX.

The generation unit 304 generates a route table. The generation unit 304 generates, for example, the route table based on the route information received by the route information reception unit 303. The generation unit 304 may store the generated route table in the storage unit 306.

The request reception unit 305 receives a session creation request of the communication terminal 60 requesting creation of a session to the PDN 40. The request reception unit 305 receives, for example, the session creation request of the communication terminal 60 from an MME corresponding to the SGW 300.

The transmission unit 312 transmits various types of information. The transmission unit 312 transmits, for example, various types of information based on various types of information stored in the storage unit 306.

The transmission unit 312 transmits, for example, various types of information by using a router. When the SGW 300 includes a router function, the transmission unit 312 may transmit various types of information using the router function of the SGW 300.

The request transmission unit 313 transmits the session creation request of the communication terminal 60. The request transmission unit 313 transmits, for example, the session creation request of the communication terminal 60 in response to the request reception unit 305 receiving the session creation request of the communication terminal 60.

The request transmission unit 313 transmits, for example, the session creation request of the communication terminal 60 to a PGW selected, based on the PGW selection condition, as a transmission destination of the session creation request of the communication terminal 60 from among the plurality of PGWs included in the system 10. The request transmission unit 313 transmits, for example, the session creation request of the communication terminal 60 to a PGW having a route with a shortest distance to the SGW 300 among PGWs to which the session creation request of the communication terminal 60 is transmittable. In this case, the PGW selection condition is that a PGW has the route with the shortest distance to the SGW 300 among the PGWs to which the SGW 300 is capable of transmitting the session creation request of the communication terminal 60.

The request transmission unit 313 transmits, for example, when each PGW of the plurality of PGWs included in the system 10 is separated into a PGW-C and a PGW-U, the session creation request of the communication terminal 60 to a PGW-C selected, based on the PGW-C selection condition, as a transmission destination of the session creation request of the communication terminal 60 from among a plurality of PGW-Cs included in the system 10. The request transmission unit 313 transmits, for example, the session creation request of the communication terminal 60 to a PGW-C having a route with a shortest distance to the SGW 300 among PGW-Cs to which the session creation request of the communication terminal 60 is transmittable. In this case, the PGW-C selection condition is that the SGW 300 has the route with the shortest distance to the SGW 300 among the PGW-Cs to which the session creation request of the communication terminal 60 is transmittable.

An entity that selects the transmission destination of the session creation request of the communication terminal 60 is, for example, a router. In this case, the request transmission unit 313 may transmit, using the router, the session creation request of the communication terminal 60 to the transmission destination of the session creation request of the communication terminal 60.

When the SGW 300 includes a router function, the entity that selects the transmission destination of the session creation request of the communication terminal 60 may be the SGW 300. In this case, the request transmission unit 313 may select the transmission destination of the session creation request of the communication terminal 60 according to the BGP best path selection algorithm, based on the route table stored in the storage unit 306, and transmit the session creation request of the communication terminal 60 to the selected transmission destination of the session creation request of the communication terminal 60.

The response reception unit 307 receives a session creation response for the communication terminal 60 to the session creation request of the communication terminal 60 transmitted by the request transmission unit 313. The response reception unit 307 receives, for example, the session creation response for the communication terminal 60 from the PGW selected as a transmission destination of the session creation request of the communication terminal 60. The response reception unit 307 receives, for example, when each PGW of the plurality of PGWs included in the system 10 is separated into a PGW-C and a PGW-U, the session creation response for the communication terminal 60 from the PGW-C selected as the transmission destination of the session creation request of the communication terminal 60.

The data reception unit 309 receives uplink data of the communication terminal 60. The data reception unit 309 receives, for example, the uplink data of the communication terminal 60 from the communication terminal 60.

The data transmission unit 315 transmits the uplink data of the communication terminal 60. The data transmission unit 315 transmits, for example, the uplink data of the communication terminal 60 received by the data reception unit 309. The data transmission unit 315 transmits, for example, the uplink data of the communication terminal 60 after the response reception unit 307 receives the session creation response for the communication terminal 60.

The data transmission unit 315 transmits the uplink data of the communication terminal 60 to, for example, a PGW selected, based on the PGW selection condition, as a transmission destination of the uplink data of the communication terminal 60 from among the plurality of PGWs included in the system 10. The data transmission unit 315 transmits the uplink data of the communication terminal 60 to, for example, a PGW having a route with a shortest distance to the SGW 300 among PGWs to which a session creation request of the communication terminal 60 is transmittable.

For example, when each PGW of the plurality of PGWs included in the system 10 is separated into a PGW-C and a PGW-U, the data transmission unit 315 transmits the uplink data of the communication terminal 60 to a PGW-U selected, based on the PGW-U selection condition, as a transmission destination of the uplink data of the communication terminal 60 from among the plurality of PGW-Us included in the system 10. The data transmission unit 315 transmits the uplink data of the communication terminal 60 to, for example, a PGW-U having a route with a shortest distance to the SGW 300 among PGW-Us to which the uplink data of the communication terminal 60 is transmittable. In this case, the PGW-U selection condition is that a PGW-U has the route with the shortest distance to the SGW 300 among PGW-Us to which the SGW 300 is capable of transmitting the session creation request of the communication terminal 60.

The PGW selected as the transmission destination of the uplink data of the communication terminal 60 is, for example, a same PGW as the PGW selected as the transmission destination of the session creation request of the communication terminal 60. The PGW selected as the transmission destination of the uplink data of the communication terminal 60 may be a PGW different from the PGW selected as the transmission destination of the session creation request of the communication terminal 60. In this case, for example, the PGW selected as the transmission destination of the session creation request of the communication terminal 60 is disposed in the network of the first country, and the PGW selected as the transmission destination of the uplink data of the communication terminal 60 is disposed in the network of the second country different from the first country. Both the PGW selected as the transmission destination of the session creation request of the communication terminal 60 and the PGW selected as the transmission destination of the uplink data of the communication terminal 60 may be disposed in the first country.

The PGW-U selected as the transmission destination of the uplink data of the communication terminal 60 is disposed, for example, in the network in which the PGW-C selected as the transmission destination of the session creation request of the communication terminal 60 is disposed. The PGW-U selected as the transmission destination of the uplink data of the communication terminal 60 may be disposed in a network different from the network in which the PGW-C selected as the transmission destination of the session creation request of the communication terminal 60 is disposed. In this case, for example, the PGW-C selected as the transmission destination of the session creation request of the communication terminal 60 is disposed in the network of the first country, and the PGW-U selected as the transmission destination of the uplink data of the communication terminal 60 is disposed in the network of the second country different from the first country. Both the PGW-C selected as the transmission destination of the session creation request of the communication terminal 60 and the PGW-U selected as the transmission destination of the uplink data of the communication terminal 60 may be disposed in the first country.

An entity that selects the transmission destination of the uplink data of the communication terminal 60 is, for example, a router. In this case, the data transmission unit 315 may transmit the uplink data of the communication terminal 60 to the transmission destination of the uplink data of the communication terminal 60 by using the router.

When the SGW 300 includes a router function, the entity that selects the transmission destination of the uplink data of the communication terminal 60 may be the SGW 300. In this case, the data transmission unit 315 may select the transmission destination of the uplink data of the communication terminal 60 in accordance with the BGP best path selection algorithm, based on the route table stored in the storage unit 306, and may transmit the uplink data of the communication terminal 60 to the selected transmission destination of the uplink data of the communication terminal 60.

When the SGW 300 is separated into the SGW-C 320 and the SGW-U 340, the SGW-C 320 may include the route information reception unit 303, the generation unit 304, the request reception unit 305, the storage unit 306, the response reception unit 307, and the request transmission unit 313, and the SGW-U 340 may include the storage unit 306, the data reception unit 309, and the data transmission unit 315. The SGW-C 320 and the SGW-U 340 may share the storage unit 306, or may individually include the storage units 306.

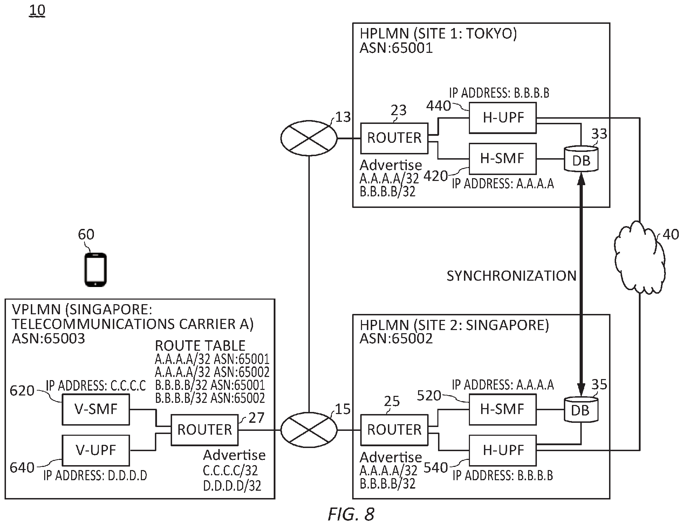

FIG. 8 schematically illustrates another example of the system 10. FIG. 8 illustrates an example in which the mobile communication service provided by the system 10 is a 5G communication service. Here, differences from the system 10 of FIG. 1 will be mainly described.

The system 10 may include a plurality of H-SMFs. FIG. 8 illustrates an example in which the system 10 includes two H-SMFs, namely an H-SMF 420 and an H-SMF 520. The number of H-SMFs included in the system 10 is not limited to two, and may be three or more.

The system 10 may include a plurality of H-UPFs. FIG. 8 illustrates an example in which the system 10 includes two H-UPFs, namely an H-UPF 440 and an H-UPF 540. The number of H-UPFs included in the system 10 is not limited to two, and may be three or more.

The system 10 may include a V-SMF 620. The system 10 may include a V-UPF 640. The V-UPF 640 may be disposed in a network in which the V-SMF 620 is disposed.

The system 10 may include a router 23. The system 10 may include a database 33. The system 10 may include a router 25. The system 10 may include a database 35. The system 10 may include a router 27.

The plurality of H-SMFs and the plurality of H-UPFs included in the system 10 may be disposed in the HPLMN that is the network of the telecommunications carrier that has issued the SIM card to the user of the communication terminal 60. The V-SMF 620 and the V-UPF 640 included in the system 10 may be disposed in the VPLMN that is the network of the telecommunications carrier at the visited destination of the user of the communication terminal 60. Here, description will be continued assuming that the subscriber information of the user of the communication terminal 60 is synchronized in advance among the HPLMNs.

Each H-SMF of the plurality of H-SMFs is disposed in a network having a different ASN, and a same IP address is assigned to each H-SMF. For example, IP Anycast is used to assign the same IP address to each H-SMF. Here, respective configurations of the H-SMF 420 and the H-SMF 520 illustrated in FIG. 8 will be described.

The H-SMF 420 has a function of managing a session. The H-SMF 420 is disposed, for example, in the network of the first country. In one example illustrated in FIG. 8, the H-SMF 420 is disposed in the network in Tokyo, Japan, whose ASN is 65001.

An IP address may be assigned to the H-SMF 420. In one example of the system 10 illustrated in FIG. 8, the IP address A.A.A.A with the subnet mask 32 is assigned to the H-SMF 420.

The H-SMF 520 has a function of managing a session. The H-SMF 520 may have a function similar to that of the H-SMF 420.

The H-SMF 520 is disposed, for example, in a network having an ASN different from the ASN of the network in which the H-SMF 420 is disposed. The H-SMF 520 is disposed, for example, in the network of the second country different from the first country. The H-SMF 520 may be disposed in the network of the first country. In one example illustrated in FIG. 8, the H-SMF 520 is disposed in the network in Singapore whose ASN is 65002.

An IP address may be assigned to the H-SMF 520. In one example of the system 10 illustrated in FIG. 8, the IP address A.A.A.A with the subnet mask 32 is assigned to the H-SMF 520.

Each H-UPF of the plurality of H-UPFs is disposed in a network having a different ASN, and a same IP address is assigned to each H-UPF. For example, IP Anycast is used to assign the same IP address to each H-UPF. Here, respective configurations of the H-UPF 440 and the H-UPF 540 illustrated in FIG. 8 will be described.

The H-UPF 440 has a function of transferring data of the communication terminal 60. The H-UPF 440 is disposed, for example, in the network in which the H-SMF 420 is disposed. The H-UPF 440 is disposed, for example, in the network of the first country. In one example illustrated in FIG. 8, the H-UPF 440 is disposed in the network in Tokyo, Japan whose ASN is 65001.

An IP address may be assigned to the H-UPF 440. For example, an IP address different from the IP address assigned to the H-SMF 420 is assigned to the H-UPF 440. In one example of the system 10 illustrated in FIG. 8, B.B.B.B with the subnet mask 32 is assigned to the H-UPF 440.

The H-UPF 540 has a function of transferring data of the communication terminal 60. The H-UPF 540 may have a function similar to that of the H-UPF 440.

The H-UPF 540 is disposed, for example, in the network in which the H-SMF 520 is disposed. The H-UPF 540 is disposed, for example, in a network having an ASN different from the ASN of the network in which the H-UPF 440 is disposed. The H-UPF 540 is disposed, for example, in the network of the second country different from the first country. The H-UPF 540 may be disposed in the network of the first country. In one example illustrated in FIG. 8, the H-UPF 540 is disposed in the network in Singapore whose ASN is 65002.

An IP address may be assigned to H-UPF 540. For example, an IP address different from the IP address assigned to the H-SMF 520 is assigned to the H-UPF 540. In one example of the system 10 illustrated in FIG. 8, B.B.B.B with the subnet mask 32 is assigned to the H-UPF 540.

The V-SMF 620 has a function of managing a session. In one example illustrated in FIG. 8, the V-SMF 620 is disposed in the network of the telecommunications carrier A in Singapore whose ASN is 65003.

An IP address may be assigned to the V-SMF 620. In one example of the system 10 illustrated in FIG. 8, the IP address C.C.C.C with the subnet mask 32 is assigned to the V-SMF 620.

The V-UPF 640 has a function of transferring data of the communication terminal 60. The V-UPF 640 is disposed, for example, in the network in which the V-SMF 620 is disposed. In one example illustrated in FIG. 8, the V-UPF 640 is disposed in the network of the telecommunications carrier A in Singapore whose ASN is 65003.

An IP address may be assigned to the V-UPF 640. For example, an IP address different from the IP address assigned to the V-SMF 620 is assigned to the V-UPF 640. In one example of the system 10 illustrated in FIG. 8, D.D.D.D with the subnet mask 32 is assigned to the V-UPF 640.

The router 23 has a function of relaying data. The router 23 relays, for example, uplink data. The router 23 relays, for example, downlink data.

The router 23 is disposed, for example, in the HPLMN in which the H-SMF 420 is disposed. The router 23 is disposed, for example, in the HPLMN in which H-UPF 440 is disposed.

The router 23 may be separated from the H-SMF 420 and the H-UPF 440. The router 23 may be integrated with the H-SMF 420. The router 23 may be integrated with the H-UPF 440.

The router 25 has a function of relaying data. The router 25 has a function similar to that of the router 23.

The router 25 is disposed, for example, in the HPLMN in which the H-SMF 520 is disposed. The router 25 is disposed, for example, in the HPLMN in which the H-UPF 540 is disposed.

The router 25 may be separated from the H-SMF 520 and the H-UPF 540. The router 25 may be integrated with the H-SMF 520. The router 25 may be integrated with the H-UPF 540.

The router 27 has a function of relaying data. The router 27 relays, for example, uplink data. The router 27 relays, for example, downlink data.

The router 27 is disposed, for example, in the VPLMN in which the V-SMF 620 is disposed. The router 27 is disposed, for example, in the VPLMN in which the V-UPF 640 is disposed.

The router 27 may be separated from the V-SMF 620 and the V-UPF 640. The router 27 may be integrated with the V-SMF 620. The router 27 may be integrated with the V-UPF 640.

For example, inter-organizational route information is exchanged among the router 23, the router 25, and the router 27 in accordance with BGP. For example, in response to a change in route information, the route information is exchanged among the router 23, the router 25, and the router 27. The route information may be periodically exchanged among the router 23, the router 25, and the router 27.

The router 23 advertises, for example, the route information toward the router 27. The router 23 may advertise the route information toward the IPX. The router 25 may advertise the route information in a manner similar to that of the router 23.

In one example of the system 10 illustrated in FIG. 8, the router 23 advertises ASN = 65001, IP address of H-SMF 420 = A.A.A.A/32, and IP address of H-UPF 440 = B.B.B.B/32. In addition, in one example of the system 10 illustrated in FIG. 8, the router 25 advertises ASN = 65002, IP address of H-SMF 520 = A.A.A.A/32, and IP address of H-UPF 540 = B.B.B.B/32.

The router 27 advertises, for example, the route information toward the router 23 and the router 25. The router 27 may advertise the route information toward the IPX. In one example of the system 10 illustrated in FIG. 8, the router 27 advertises ASN = 65003, IP address of V-SMF 620 = C.C.C.C/32, and IP address of V-UPF 640 = D.D.D.D/32.

The router 27 generates, for example, a route table. The router 27 generates, for example, the route table based on the route information advertised by each of the router 23 and the router 25. The router 27 generates, for example, the route table by associating an ASN of a network in which a router is disposed with an IP address assigned to an apparatus disposed in the network. In one example of the system 10 illustrated in FIG. 8, the router 27 generates a route table including ASN = 65001 and IP address of H-SMF 420 = A.A.A.A/32, ASN = 65001 and IP address of H-UPF 440 = B.B.B.B/32, ASN = 65002 and IP address of H-SMF 520 = A.A.A.A/32, and ASN = 65002 and IP address of H-UPF 540 = B.B.B.B/32.

The V-SMF 620 receives, for example, a session creation request of the communication terminal 60 of the user who has visited the VPLMN, the session creation request requesting creation of a session to the PDN 40. The session creation request includes, for example, the IP address of the V-SMF 620. The session creation request includes, for example, the IP address of the V-UPF 640. The session creation request includes, for example, a TEID assigned to a communication tunnel of the V-SMF 620. The session creation request includes, for example, a TEID that is assigned to a communication tunnel of V-UPF 640 and that is different from the TEID assigned to the communication tunnel of V-SMF 620. The session creation request includes, for example, an IP address of an H-SMF included in the system 10. The session creation request includes, for example, an IP address of an H-UPF included in the system 10.

The V-SMF 620 may transmit, using the router 27, the received session creation request of the communication terminal 60. The router 27 may select, based on a predetermined H-SMF selection condition, an H-SMF that is a transmission destination of a session creation request of the communication terminal 60 from among the plurality of H-SMFs included in the system 10.

The router 27 selects, for example, as the H-SMF that is the transmission destination of the session creation request of the communication terminal 60, an H-SMF having a route with a shortest distance to the V-SMF 620 from among the plurality of H-SMFs included in the system 10. The router 27 selects, for example, when there are a plurality of H-SMFs to which a same IP address is assigned, based on the generated route table, in accordance with the BGP best path selection algorithm, as the H-SMF that is the transmission destination of the session creation request of the communication terminal 60, an H-SMF having a route with a shortest distance to the SGW 300 from among the plurality of H-SMFs to which the same IP address is assigned.

In one example of the system 10 illustrated in FIG. 8, a route from the H-SMF 420 to the V-SMF 620 passes through the network 13 constructed in Tokyo and the network 15 constructed in Singapore. In contrast, a route from the H-SMF 520 to the V-SMF 620 passes through only the network 15. Therefore, in one example of the system 10 illustrated in FIG. 8, when the V-SMF 620 is in a state in which the V-SMF 620 is capable of transmitting the session creation request of the communication terminal 60 to both the H-SMF 420 and the H-SMF 520 by using the router 27, since a distance of the route from the H-SMF 520 to the V-SMF 620 is shorter than a distance of the route from the H-SMF 420 to the V-SMF 620, the router 27 selects the H-SMF 520 from among the H-SMF 420 and the H-SMF 520 as the H-SMF that is the transmission destination of the session creation request of the communication terminal 60. Here, description will be continued assuming that the router 27 has selected the H-SMF 520 as the H-SMF that is the transmission destination of the session creation request of the communication terminal 60.

The V-SMF 620 may transmit, using the router 27, the session creation request of the communication terminal 60 to the H-SMF 520 via the network 15. The H-SMF 520 may receive, using the router 25, the session creation request of the communication terminal 60 via the network 15. The H-SMF 520 may be an example of the H-SMF selected as the transmission destination of the session creation request of the communication terminal 60.

The H-SMF 520 may create session information of the communication terminal 60 in response to receiving the session creation request of the communication terminal 60 from the V-SMF 620. The session information includes, for example, the IP address of the H-SMF included in the system 10. The session information includes, for example, the IP address of the H-UPF included in the system 10, the IP address being different from the IP address of the H-SMF. The session information includes, for example, the TEIDs assigned to respective H-SMF communication tunnels of the plurality of H-SMFs included in the system 10. The session information includes, for example, the TEID that is assigned to each H-UPF communication tunnel of the plurality of H-UPFs included in the system 10 and that is different from the TEID assigned to the communication tunnel of the H-SMF. The session information includes, for example, the IP address of the V-SMF 620. The session information includes, for example, the IP address of the V-UPF 640 that is different from the IP address of the V-SMF 620. The session information includes, for example, the TEID assigned to the communication tunnel of the V-SMF 620. The session information includes, for example, the TEID that is assigned to the communication tunnel of the V-UPF 640 and that is different from the TEID assigned to the communication tunnel of the V-SMF 620.

The H-SMF 520 may register the created session information of the communication terminal 60 in the database 35 corresponding to the H-SMF 520. The H-SMF 520 may store, for example, the IP address of the database 35 in advance.

The database 35 includes, for example, a message queue that temporarily stores the session information of the communication terminal 60. The database 35 may be an example of the memory unit.

The database 35 may be separated from the H-SMF 520. The database 35 may be integrated with the H-SMF 520.

The database 35 is disposed, for example, in the network in which the H-SMF 520 is disposed. The database 35 may be disposed in a network having an ASN different from the ASN of the network in which the H-SMF 520 is disposed.

The database 35 may synchronize the registered session information of the communication terminal 60 between the database 35 and the database 33 corresponding to the H-SMF 420. The database 33 may be an example of the memory unit.

The database 35 synchronizes, for example, the session information of the communication terminal 60 between the database 35 and the database 33 by using the Pub/Sub (Publish/Subscribe) method. In this case, the database 35 may be a publisher, and the database 33 may be a subscriber.

For example, the database 35 transmits, to a topic, a message including the session information of the communication terminal 60. The database 33 acquires the session information of the communication terminal 60 by receiving a message from a subscription corresponding to the topic to which the message has been transmitted by the database 35. Thus, the session information of the communication terminal 60 is synchronized between the database 35 and the database 33.

The database 33 may be separated from the H-SMF 420. The database 33 may be integrated with the H-SMF 420.

The database 33 is disposed, for example, in the network in which the H-SMF 420 is disposed. The database 33 may be disposed in a network having an ASN different from the ASN of the network in which the H-SMF 420 is disposed.

In response to creating the session information of the communication terminal 60, the H-SMF 520 may transmit, to the V-SMF 620, by using the router 25, via the network 15, the session creation response for the communication terminal 60 to the session creation request of the communication terminal 60. The session creation response includes, for example, the IP address of the H-SMF included in the system 10. The session creation response includes, for example, the IP address of the H-UPF included in the system 10. The session creation response includes, for example, the TEID assigned to each H-SMF communication tunnel of the plurality of H-SMFs included in the system 10. The session creation response includes, for example, the TEID assigned to each H-UPF communication tunnel of the plurality of H-UPFs included in the system 10.

The V-SMF 620 may receive the session creation response for the communication terminal 60 via the network 15 by using the router 27. Thus, the V-SMF 620 can create the session to the PDN 40 for the communication terminal 60, based on the session creation response for the communication terminal 60.

Thereafter, the V-UPF 640 may receive the uplink data of the communication terminal 60 from the communication terminal 60. The V-UPF 640 may transmit the received uplink data of the communication terminal 60 by using the router 27.

The router 27 selects, for example, based on a predetermined H-UPF selection condition, an H-UPF that is a transmission destination of the uplink data of the communication terminal 60, from among the plurality of H-UPFs included in the system 10. The router 27, for example, when there are a plurality of H-UPFs to which a same IP address is assigned, selects, based on the generated route table and in accordance with the BGP best path selection algorithm, as the H-UPF that is the transmission destination of the uplink data of the communication terminal 60, an H-UPF having a route with a shortest distance to the V-UPF 640 from among the plurality of H-UPFs to which the same IP address is assigned.

In one example of the system 10 illustrated in FIG. 8, when the V-UPF 640 is in a state in which the V-UPF 640 can transmit the uplink data of the communication terminal 60 to both the H-UPF 440 and the H-UPF 540 by using the router 27, the router 27 selects the H-UPF 540 from among the H-UPF 440 and the H-UPF 540 as an H-UPF that is a transmission destination of the uplink data of the communication terminal 60. Here, description will be continued assuming that the router 27 has selected the H-UPF 540 as the H-UPF that is the transmission destination of the uplink data of the communication terminal 60.

The V-UPF 640 may transmit the uplink data of the communication terminal 60 to the H-UPF 540 via the network 15 by using the router 27. The H-UPF 540 may receive the uplink data of the communication terminal 60 via the network 15 by using the router 25. The H-UPF 540 may be an example of the H-UPF selected as the transmission destination of the uplink data of the communication terminal 60.

When the H-UPF 540 receives the uplink data of the communication terminal 60 and does not hold the session information of the communication terminal 60, the H-UPF 540 acquires session information of the communication terminal 60 from the database 35, and processes the data of the communication terminal 60 based on the session information of the communication terminal 60 acquired from the database 35. On the other hand, when the H-UPF 540 receives the uplink data of the communication terminal 60 and holds the session information of the communication terminal 60, the H-UPF 540 processes the data of the communication terminal 60 based on the session information of the communication terminal 60 being held.

The database 35 may be a database corresponding to the H-UPF 540. The database 35 may be separated from the H-UPF 540, or may be integrated with the H-UPF 540. The database 35 may be disposed, for example, in the network in which the H-UPF 540 is disposed, or may be disposed in a network having an ASN different from the ASN of the network in which H-UPF 540 is disposed.

For example, when a state of at least one H-UPF of the plurality of H-UPFs included in the system 10 changes, such as when a failure occurs in one H-UPF of the plurality of H-UPFs included in the system 10 or when maintenance of the one H-UPF is started, the router 27 updates the route table. The router 27 may select, based on the updated route table and in accordance with the BGP best path selection algorithm, the H-UPF that is the transmission destination of the uplink data of the communication terminal 60, from among the plurality of H-UPFs included in the system 10.

In one example of the system 10 illustrated in FIG. 8, when the V-UPF 640 is transmitting the uplink data of the communication terminal 60 to the H-UPF 540 by using the router 27, and when a state in which the V-UPF 640 can transmit the uplink data of the communication terminal 60 to both the H-UPF 440 and the H-UPF 540 by using the router 27 changes to a state in which the V-UPF 640 can transmit the uplink data of the communication terminal 60 only to the H-UPF 440 by using the router 27, the router 27 may update the route table. Thereafter, the router 27 may select the H-UPF 440 as the H-UPF that is the transmission destination of the uplink data of the communication terminal 60, based on the updated route table.

The V-UPF 640 may transmit the uplink data of the communication terminal 60 to the H-UPF 440 via the network 15 and the network 13 by using the router 27. The H-UPF 440 may receive the uplink data of the communication terminal 60 via the network 15 and the network 13 by using the router 23. The H-UPF 440 may be an example of the H-UPF selected as the transmission destination of the uplink data of the communication terminal 60.

When the H-UPF 440 receives the uplink data of the communication terminal 60 and does not hold the session information, the H-UPF 440 acquires, from the database 33, the session information of the communication terminal 60 synchronized between the database 33 and the database 35, and processes the data of the communication terminal 60 based on the session information of the communication terminal 60 acquired from the database 33. On the other hand, when the H-UPF 440 receives the uplink data of the communication terminal 60 and holds the session information of the communication terminal 60, the H-UPF 440 processes the data of the communication terminal 60 based on the session information of the communication terminal 60 being held.

The database 33 may be a database corresponding to the H-UPF 440. The database 33 may be separated from the H-UPF 440, or may be integrated with the H-UPF 440. The database 33 may be disposed, for example, in the network in which the H-UPF 440 is disposed, or may be disposed in a network having an ASN different from the ASN of the network in which the H-UPF 440 is disposed.

In the example of the system 10 illustrated in FIG. 8, when the data of the communication terminal 60 is communicated on a route between the communication terminal 60 and the PDN 40 via the V-UPF 640 and the H-UPF 540, the data of the communication terminal 60 is communicated by domestic roaming. On the other hand, in one example of the system 10 illustrated in FIG. 8, when the data of the communication terminal 60 is communicated on a route between the communication terminal 60 and the PDN 40 via the V-UPF 640 and the H-UPF 440, the data of the communication terminal 60 is communicated by international roaming.

In one example of the system 10 illustrated in FIG. 8, when, at a timing at which the V-SMF 620 transmits the session creation request of the communication terminal 60, the V-SMF 620 is in a state in which the V-SMF 620 can transmit the session creation request of the communication terminal 60 only to the H-SMF 420 by using the router 27, the router 27 selects the H-UPF 440 as the H-SMF that is the transmission destination of the session creation request of the communication terminal 60. In this case, the V-SMF 620 may transmit the session creation request of the communication terminal 60 to the H-UPF 440 by using the router 27 via the network 15 and the network 13. The H-UPF 440 may receive the session creation request of the communication terminal 60 by using the router 23 via the network 15 and the network 13. The H-SMF 420 may be an example of the H-SMF selected as the transmission destination of the session creation request of the communication terminal 60.

The H-SMF 420 may create session information of the communication terminal 60 in response to receiving the session creation request from the V-SMF 620. The H-SMF 420 may register the created session information of the communication terminal 60 in the database 33. The H-SMF 420 may store, for example, the IP address of the database 33 in advance.

The database 33 may have a function similar to that of the database 35. For example, when the H-SMF 420 registers the session information of the communication terminal 60 in the database 33, the database 33 synchronizes the session information of the communication terminal 60 between the database 33 and the database 35 in a manner similar to that of the database 35.

In one example of the system 10 illustrated in FIG. 8, the telecommunications carrier that has issued the SIM card to the user of the communication terminal 60 may construct HPLMNs at three or more sites. In this case, a same IP address may be assigned to an H-SMF of each site of the three or more sites, and a same IP address may be assigned to an H-UPF of each site of the three or more sites.

According to the system 10 illustrated in FIG. 8, the V-SMF 620 can preferentially transmit the session creation request of the communication terminal 60 to an H-SMF having a short distance to the V-SMF 620, and the V-UPF 640 can preferentially transmit the uplink data of the communication terminal 60 to an H-UPF having a short distance to the V-UPF 640. Therefore, the system 10 illustrated in FIG. 8 contributes to realization of a 5G communication service in which occurrence of the communication delay of the communication terminal 60 is suppressed. Furthermore, by employing a configuration in which the H-UPF that has received the uplink data of the communication terminal 60 from the V-UPF 640 acquires the session information of the communication terminal 60 from the database with triggering that the H-UPF does not hold the session information of the communication terminal 60, the H-UPF that does not process the data of the communication terminal 60 no longer needs to acquire the session information of the communication terminal 60. As a result, the system 10 illustrated in FIG. 8 contributes to realization of a 5G communication service in which consumption of communication resources is suppressed.

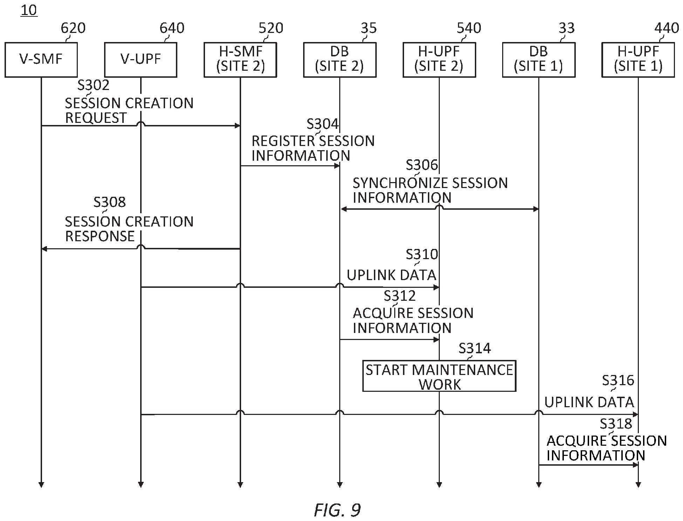

FIG. 9 is an explanatory diagram for explaining another example of the processing flow of the system 10. Here, description will be given with a state in which the user of the communication terminal 60 visits a VPLMN as an initial state.

In S302, the V-SMF 620 transmits a session creation request of the communication terminal 60 that requests creation of a session to the PDN 40. For example, the V-SMF 620 transmits the session creation request of the communication terminal 60 received from an Access and Mobility Management Function (AMF) corresponding to the V-SMF 620 that has accepted an attach request from the communication terminal 60 and has executed authentication processing of the communication terminal 60. Here, description will be continued on the assumption that the V-SMF 620 is in a state in which the V-SMF 620 can transmit the session creation request of the communication terminal 60 to both the H-SMF 420 and the H-SMF 520 by using the router 27, the router 27 selects the H-SMF 520 as an H-SMF that is a transmission destination of the session creation request of the communication terminal 60, based on the H-SMF selection condition, and the V-SMF 620 transmits the session creation request of the communication terminal 60 to the H-SMF 520 by using the router 27.

The H-SMF 520 receives the session creation request of the communication terminal 60 from the V-SMF 620. The H-SMF 520 may create the session information of the communication terminal 60 based on the received session creation request of the communication terminal 60.

In S304, the H-SMF 520 registers the created session information of the communication terminal 60 in the database 35. In S306, the database 35 synchronizes, between the database 35 and the database 33, the session information of the communication terminal 60 registered by the H-SMF 520 in S304.

In S308, the H-SMF 520 transmits, to the V-SMF 620, the session creation response for the communication terminal 60 to the session creation request of the communication terminal 60. The V-SMF 620 receives, from the H-SMF 520, the session creation response for the communication terminal 60. The V-SMF 620 may store the received session creation response for the communication terminal 60 such that the V-SMF 620 and the V-UPF 640 can use the session creation response for the communication terminal 60.

In S310, the V-UPF 640 transmits uplink data of the communication terminal 60 based on the session creation response for the communication terminal 60 received by the V-SMF 620 in S308. Here, description will be continued on the assumption that the V-UPF 640 is in a state in which the V-UPF 640 can transmit the uplink data of the communication terminal 60 to both the H-UPF 440 and the H-UPF 540 by using the router 27, the router 27 selects the H-UPF 540 as an H-UPF that is a transmission destination of the uplink data of the communication terminal 60 based on the H-UPF selection condition, the V-UPF 640 transmits the uplink data of the communication terminal 60 to the H-UPF 540 by using the router 27, and the H-UPF 540 does not hold the session information of the communication terminal 60.

In S312, since the H-UPF 540 does not hold the session information of the communication terminal 60 for processing the uplink data of the communication terminal 60 received in S310, the H-UPF 540 acquires the session information of the communication terminal 60 from the database 35. The H-UPF 540 processes the data of the communication terminal 60 based on the session information of the communication terminal 60 acquired from the database 35.

In S314, maintenance work of the H-UPF 540 is started. The router 27 may update the route table in response to the maintenance work of the H-UPF 540 being started.

In S316, the V-UPF 640 transmits the uplink data of the communication terminal 60 based on the session creation response for the communication terminal 60 received by the V-SMF 620 in S308. Here, description will be continued on the assumption that the V-UPF 640 is in a state in which the V-UPF 640 can transmit the uplink data of the communication terminal 60 only to the H-UPF 440 using the router 27, the V-UPF 640 transmits the uplink data of the communication terminal 60 to the H-UPF 440 using the router 27, and the H-UPF 440 does not hold the session information of the communication terminal 60.

In S318, since the H-UPF 440 does not hold the session information of the communication terminal 60 for processing the uplink data of the communication terminal 60 received in S316, the H-UPF 440 acquires, from the database 33, the session information of the communication terminal 60 synchronized between the database 33 and the database 35 in S306. The H-UPF 440 processes the data of the communication terminal 60 based on the session information of the communication terminal 60 acquired from the database 33.

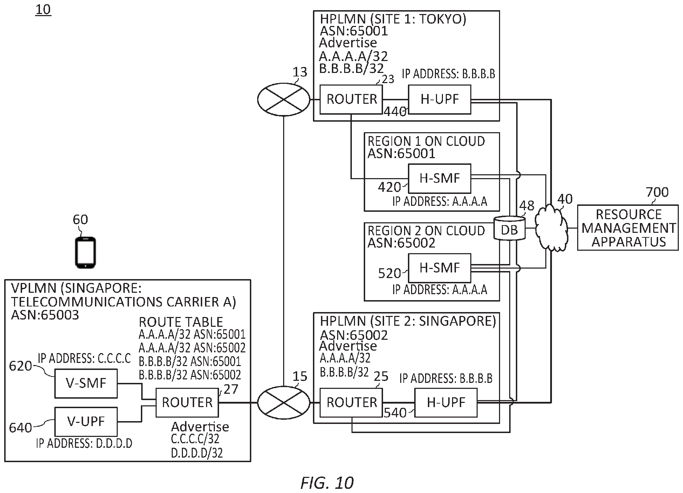

FIG. 10 schematically illustrates another example of the system 10. Here, differences from system 10 illustrated in FIG. 8 will be mainly described.

The H-SMF 420 may be disposed on a cloud. The H-SMF 420 may be disposed on a same network as that of the PDN 40, or may be disposed on a network different from that of the PDN 40. In one example of the system 10 illustrated in FIG. 10, the H-SMF 420 is disposed in region 1 on the cloud whose ASN is 65001.

H-SMF 520 may be disposed on the cloud. H-SMF 520 may be disposed on the same network as the PDN 40, or may be disposed on the network different from the PDN 40. In one example of the system 10 illustrated in FIG. 10, H-SMF 520 is disposed in region 2 on the cloud whose ASN is 65002.

Each H-SMF of a plurality of H-SMFs included in the system 10 may be capable of accessing the database 48. Each H-SMF accesses the database 48, for example, via PDN 40. Each H-SMF may directly access the database 48. The H-SMF selected as a transmission destination of the session creation request of the communication terminal 60 may register created session information of the communication terminal 60 in the database 48.

Each H-UPF of a plurality of H-UPFs included in the system 10 may be capable of accessing the database 48. Each H-UPF accesses the database 48, for example, via PDN 40. Each H-UPF may directly access the database 48. The H-UPF selected as the transmission destination of uplink data of the communication terminal 60, when not holding session information of the communication terminal 60, may acquire session information of the communication terminal 60 from the database 48 and may process data of the communication terminal 60 based on the session information of the communication terminal 60 acquired from the database 48.

Resource management apparatus 700 manages physical resources on the cloud by, for example, allocating physical resources on the cloud to each H-SMF of a plurality of H-SMFs included in the system 10. Resource management apparatus 700 determines, for example, a resource amount of physical resources on the cloud to be allocated to each H-SMF based on a load status of each H-SMF.

Resource management apparatus 700 determines, for example, the resource amount of physical resources on the cloud to be allocated to each H-SMF so as to allocate a larger amount of resources to an H-SMF that receives a larger number of session creation requests per unit time. Resource management apparatus 700 determines, for example, the resource amount of physical resources on the cloud to be allocated to each H-SMF so as to allocate a larger amount of resources to an H-SMF having a larger traffic volume per unit time. Resource management apparatus 700 may determine a resource amount of physical resources on the cloud to be allocated to each H-SMF so as to allocate a larger amount of resources to the H-SMF having a slower processing speed.

Resource management apparatus 700 transmits, for example, resource amount information indicating the resource amount of physical resources on the cloud to be allocated to each H-SMF to each H-SMF. Resource management apparatus 700 transmits, for example, the resource amount information to each H-SMF via PDN 40.

Each H-SMF may receive the resource amount information from the resource management apparatus 700. Each H-SMF may execute processing related to the mobile communication service using the physical resources on the cloud allocated by resource management apparatus 700.

Resource management apparatus 700 changes, for example, the resource amount of physical resources on the cloud to be allocated to each H-SMF based on a usage status of the physical resources on the cloud. Resource management apparatus 700 changes, for example, the resource amount of physical resources on the cloud to be allocated to each H-SMF based on the CPU utilization rate on the cloud. Resource management apparatus 700 changes, for example, a resource amount of physical resources on the cloud to be allocated to each H-SMF at a timing when the CPU utilization rate on the cloud exceeds a predetermined CPU utilization rate threshold. Resource management apparatus 700 may change a resource amount of physical resources on the cloud to be allocated to each H-SMF at a timing when the CPU utilization rate on the cloud falls below a predetermined CPU utilization rate threshold. Resource management apparatus 700 may change the resource amount of physical resources on the cloud to be allocated to each H-SMF based on the memory utilization rate on the cloud. Resource management apparatus 700 changes, for example, a resource amount of physical resources on the cloud to be allocated to each H-SMF at a timing when the memory utilization rate on the cloud exceeds a predetermined memory utilization rate threshold. Resource management apparatus 700 may change the resource amount of physical resources on the cloud to be allocated to each H-SMF at a timing when the memory utilization rate on the cloud falls below a predetermined memory utilization rate threshold. Resource management apparatus 700 may periodically change the resource amount of physical resources on the cloud to be allocated to each H-SMF.

According to system 10 illustrated in FIG. 10, session information of the communication terminal 60 is registered in the database 48 disposed on the cloud, and the H-UPF selected as the transmission destination of uplink data of the communication terminal 60, when not holding session information of the communication terminal 60, acquires session information of the communication terminal 60 from the database 48. Then, the H-UPF selected as the transmission destination of uplink data of the communication terminal 60 processes data of the communication terminal 60 based on the session information of the communication terminal 60 acquired from the database 48. By registering session information of the communication terminal 60 in the database 48 disposed on the cloud, it becomes unnecessary to transmit and receive the session information of the communication terminal 60 between sites of the HPLMNs in order to synchronize the session information of the communication terminal 60 among databases disposed at respective sites of the HPLMNs. As a result, the system 10 shown in FIG. 10 contributes to realization of the 5G communication service in which consumption of communication resources is further suppressed and a risk of information leakage is further reduced.

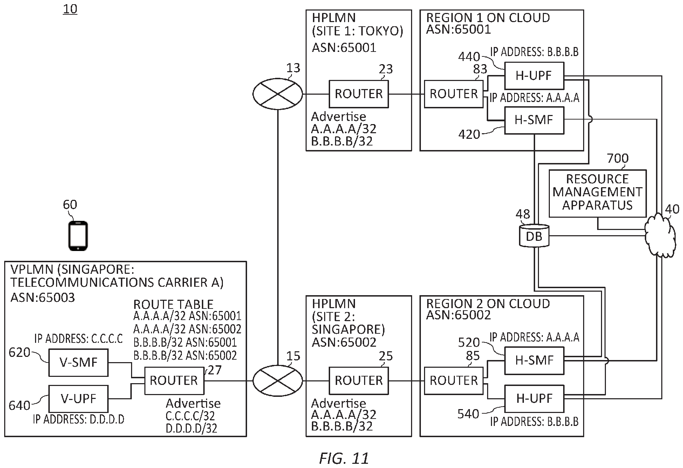

FIG. 11 schematically illustrates another example of the system 10. Here, differences from the system 10 shown in FIG. 10 will be mainly described.

The H-UPF 440 may be disposed on the cloud. The H-UPF 440 may be disposed on the same network as the PDN 40, or may be disposed on the network different from the PDN 40. In one example of the system 10 shown in FIG. 11, the H-UPF 440 is disposed in region 1 on the cloud whose ASN is 65001.

The H-UPF 540 may be disposed on the cloud. The H-UPF 540 may be disposed on the same network as that of the PDN 40, or may be disposed on a network different from that of the PDN 40. In one example of the system 10 shown in FIG. 11, the H-UPF 540 is disposed in region 2 on the cloud whose ASN is 65002.

The system 10 may further include a router 83. The H-SMF 420, for example, when selected as the transmission destination of the session creation request of the communication terminal 60, receives the session creation request of the communication terminal 60 via the network 15, the network 13, and the router 23 by using the router 83. The H-UPF 440, for example, when selected as the transmission destination of uplink data of the communication terminal 60, receives the uplink data of the communication terminal 60 via the network 15, the network 13, and the router 23 by using the router 83.

The system 10 may further include a router 85. The H-SMF 520, for example, when selected as the transmission destination of the session creation request of the communication terminal 60, receives the session creation request of the communication terminal 60 via the network 15 and the router 25 by using the router 85. The H-UPF 540, for example, when selected as the transmission destination of the uplink data of the communication terminal 60, receives the uplink data of the communication terminal 60 via the network 15 and the router 25 by using the router 85.

The resource management apparatus 700, for example, manages physical resources on the cloud by allocating the physical resources on the cloud to each H-UPF of the plurality of H-UPFs included in the system 10. The resource management apparatus 700, for example, determines a resource amount of physical resources on the cloud to be allocated to each H-UPF based on a load status of each H-UPF.

The resource management apparatus 700, for example, determines the resource amount of physical resources on the cloud to be allocated to each H-UPF so as to allocate a larger resource amount to an H-UPF that receives more uplink data per unit time. The resource management apparatus 700, for example, determines the resource amount of physical resources on the cloud to be allocated to each H-UPF so as to allocate a larger resource amount to an H-UPF having a larger traffic volume per unit time. The resource management apparatus 700, for example, determines the resource amount of physical resources on the cloud to be allocated to each H-UPF so as to allocate a larger resource amount to an H-UPF having a larger number of sessions. The resource management apparatus 700 may determine the resource amount of physical resources on the cloud to be allocated to each H-UPF so as to allocate a larger resource amount to an H-UPF having a slower processing speed.

The resource management apparatus 700, for example, transmits, to each H-UPF, resource amount information indicating the resource amount of physical resources on the cloud to be allocated to each H-UPF. The resource management apparatus 700, for example, transmits the resource amount information to each H-UPF via the PDN 40.

Each H-UPF may receive the resource amount information from the resource management apparatus 700. Each H-UPF may execute processing related to the mobile communication service by using the physical resources on the cloud allocated by the resource management apparatus 700.

The resource management apparatus 700 changes, for example, the resource amount of physical resources on the cloud to be allocated to each H-UPF, based on a usage status of the physical resources on the cloud. The resource management apparatus 700 changes, for example, in a manner similar to the case of changing the resource amount of physical resources on the cloud to be allocated to each H-SMF based on the usage status of the physical resources on the cloud, the resource amount of physical resources on the cloud to be allocated to each H-UPF based on the usage status of the physical resources on the cloud. The resource management apparatus 700 may periodically change the resource amount of physical resources on the cloud to be allocated to each H-UPF.

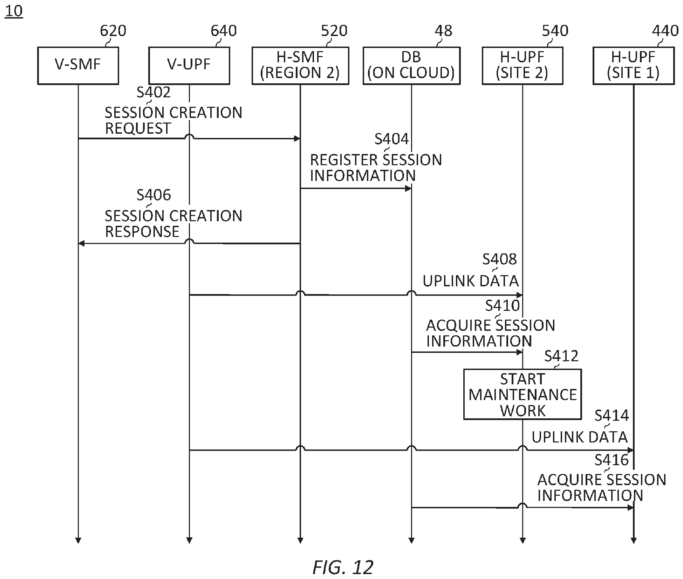

FIG. 12 is an explanatory diagram for explaining another example of the processing flow of the system 10. Here, description is given with a state in which the user of the communication terminal 60 visits a VPLMN as an initial state.

In S402, the V-SMF 620 transmits a session creation request of the communication terminal 60 that requests creation of a session to the PDN 40. Here, description is continued assuming that the V-SMF 620 is in a state in which the V-SMF 620 can transmit the session creation request of the communication terminal 60 to both the H-SMF 420 and the H-SMF 520 by using the router 27, the router 27 selects the H-SMF 520 as an H-SMF that is a transmission destination of the session creation request of the communication terminal 60 based on the H-SMF selection condition, and the V-SMF 620 transmits the session creation request of the communication terminal 60 to the H-SMF 520 by using the router 27.

The H-SMF 520 receives the session creation request of the communication terminal 60 from the V-SMF 620. The H-SMF 520 may create session information of the communication terminal 60 based on the received session creation request of the communication terminal 60.

In S404, the H-SMF 520 registers the created session information of the communication terminal 60 in the database 48 disposed on the cloud. In S406, the H-SMF 520 transmits, to the V-SMF 620, the session creation response for the communication terminal 60 to the session creation request of the communication terminal 60. The V-SMF 620 receives the session creation response for the communication terminal 60 from the H-SMF 520.

In S408, the V-UPF 640 transmits uplink data of the communication terminal 60 based on the session creation response for the communication terminal 60 received by the V-SMF 620 in S406. Here, description is continued assuming that the V-UPF 640 is in a state in which the V-UPF 640 can transmit the uplink data of the communication terminal 60 to both the H-UPF 440 and the H-UPF 540 by using the router 27, the router 27 selects the H-UPF 540 as an H-UPF that is a transmission destination of the uplink data of the communication terminal 60 based on the H-UPF selection condition, the V-UPF 640 transmits the uplink data of the communication terminal 60 to the H-UPF 540 by using the router 27, and the H-UPF 540 does not hold the session information of the communication terminal 60.

In S410, since the H-UPF 540 does not hold the session information of the communication terminal 60 for processing the uplink data of the communication terminal 60 received in S408, the H-UPF 540 acquires the session information of the communication terminal 60 from the database 48 disposed on the cloud. The H-UPF 540 processes the data of the communication terminal 60 based on the session information of the communication terminal 60 acquired from the database 48.

In S412, maintenance work of the H-UPF 540 is started. The router 27 may update the route table in response to the maintenance work of the H-UPF 540 being started.

In S414, the V-UPF 640 transmits the uplink data of the communication terminal 60 based on the session creation response for the communication terminal 60 received by the V-SMF 620 in S406. Here, description is continued assuming that the V-UPF 640 is in a state in which the V-UPF 640 can transmit the uplink data of the communication terminal 60 only to the H-UPF 440 by using the router 27, the V-UPF 640 transmits the uplink data of the communication terminal 60 to the H-UPF 440 by using the router 27, and the H-UPF 440 does not hold the session information of the communication terminal 60.

In S416, since the H-UPF 440 does not hold the session information of the communication terminal 60 for processing the uplink data of the communication terminal 60 received in S414, the H-UPF 440 acquires the session information of the communication terminal 60 from the database 48 disposed on the cloud. The H-UPF 440 processes the data of the communication terminal 60 based on the session information of the communication terminal 60 acquired from the database 48.

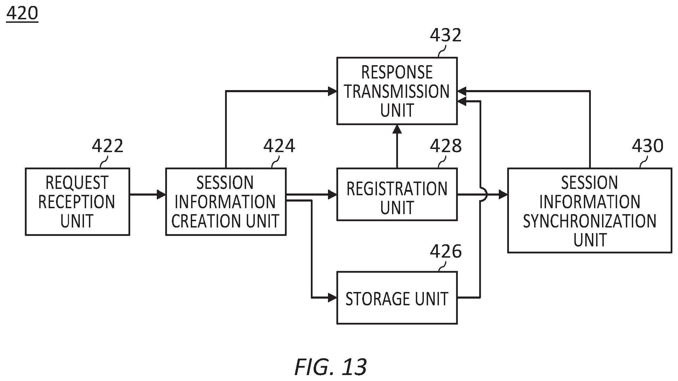

FIG. 13 schematically illustrates an example of a functional configuration of the H-SMF 420. The H-SMF 420 includes a request reception unit 422, a session information creation unit 424, a storage unit 426, a registration unit 428, a session information synchronization unit 430, and a response transmission unit 432. Note that the H-SMF 420 does not necessarily have to include all of these configurations.

The request reception unit 422 receives a session creation request of the communication terminal 60 that requests creation of a session to the PDN 40. When the H-SMF 420 is selected, from among the plurality of H-SMFs included in the system 10, as a transmission destination of the session creation request of the communication terminal 60, the request reception unit 422 receives the session creation request of the communication terminal 60.

The request reception unit 422 receives, for example, the session creation request of the communication terminal 60 by using a router. When the H-SMF 420 includes a router function, the request reception unit 422 may receive the session creation request of the communication terminal 60 by using the router function of the H-SMF 420.

The session information creation unit 424 creates session information of the communication terminal 60. The session information creation unit 424 creates, for example, the session information of the communication terminal 60 in response to the request reception unit 422 receiving the session creation request of the communication terminal 60. The session information creation unit 424 may store the created session information of the communication terminal 60 in the storage unit 426.

The registration unit 428 registers, in the memory unit, the session information of the communication terminal 60 created by the session information creation unit 424. The registration unit 428 registers, for example, the session information of the communication terminal 60 in a database disposed at a site of an HPLMN. The registration unit 428 registers, for example, the session information of the communication terminal 60 in a database disposed on a cloud.

The session information synchronization unit 430 synchronizes the session information of the communication terminal 60 registered, by the registration unit 428, in the database disposed at the site of the HPLMN, between the database and another database disposed at another site of the HPLMN. The session information synchronization unit 430 synchronizes, for example, the session information of the communication terminal 60 between the database and the another database using the Pub/Sub method. The session information synchronization unit 430 may synchronize the session information of the communication terminal 60 between the database and the another database using any other method.

The response transmission unit 432 transmits, to the V-SMF 620, a session creation response for the communication terminal 60 to the session creation request of the communication terminal 60 received by the request reception unit 422. The response transmission unit 432 transmits, for example, the session creation response for the communication terminal 60 to the V-SMF 620 in response to the session information creation unit 424 creating the session information of the communication terminal 60. The response transmission unit 432 transmits, for example, the session creation response for the communication terminal 60 to the V-SMF 620 in response to the registration unit 428 registering the session information of the communication terminal 60 in the memory unit. The response transmission unit 432 may transmit, to the V-SMF 620, the session creation response for the communication terminal 60 in response to the session information synchronization unit 430 synchronizing the session information of the communication terminal 60 between the database disposed at the site of the HPLMN and the another database disposed at the another site of the HPLMN.

The response transmission unit 432 transmits, for example, the session creation response for the communication terminal 60 by using a router. When the H-SMF 420 includes a router function, the response transmission unit 432 may transmit the session creation response for the communication terminal 60 by using the router function of the H-SMF 420.

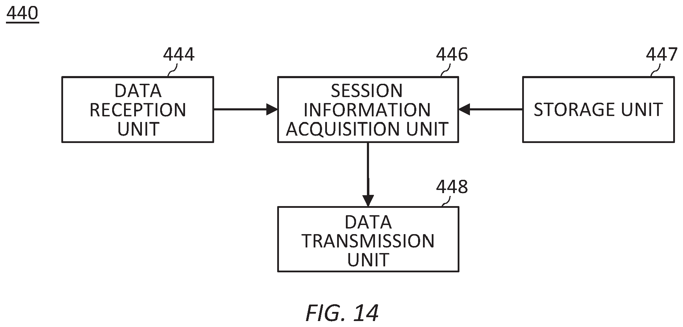

FIG. 14 schematically illustrates an example of a functional configuration of H-UPF 440. The H-UPF 440 includes a data reception unit 444, a session information acquisition unit 446, a storage unit 447, and a data transmission unit 448. Note that the H-UPF 440 does not necessarily have to include all of these configurations.

The data reception unit 444 receives data of the communication terminal 60. For example, when the H-UPF 440 is selected, from among the plurality of H-UPFs included in the system 10, as a transmission destination of the data of the communication terminal 60, the data reception unit 444 receives the data of the communication terminal 60.

The data reception unit 444 receives, for example, uplink data of the communication terminal 60 from the V-UPF 640. The data reception unit 444 receives, for example, the uplink data of the communication terminal 60 when the H-UPF 440 is selected as a transmission destination of the uplink data of the communication terminal 60 from among the plurality of H-UPFs included in the system 10.

The data reception unit 444 may receive downlink data of the communication terminal 60 from the server disposed in the PDN 40. The data reception unit 444 receives, for example, the downlink data of the communication terminal 60 when the H-UPF 440 is selected as a transmission destination of the downlink data of the communication terminal 60 from among the plurality of H-UPFs included in the system 10. In this case, the PDN 40 may be a private network.

The data reception unit 444 receives, for example, the data of the communication terminal 60 by using a router. When the H-UPF 440 includes a router function, the data reception unit 444 may receive the data of the communication terminal 60 by using the router function of the H-UPF 440.

The session information acquisition unit 446 acquires session information of the communication terminal 60. The session information acquisition unit 446 acquires, for example, the session information of the communication terminal 60 when the data reception unit 444 receives the data of the communication terminal 60. The session information acquisition unit 446 acquires, for example, the session information of the communication terminal 60 when the data reception unit 444 receives the uplink data of the communication terminal 60. The session information acquisition unit 446 may acquire the session information of the communication terminal 60 when the data reception unit 444 receives the downlink of the communication terminal 60.

For example, the session information acquisition unit 446 acquires the session information of the communication terminal 60 from the memory unit when the H-UPF 440 does not hold the session information of the communication terminal 60. The session information acquisition unit 446 acquires, for example, the session information of the communication terminal 60 from the memory unit when the data reception unit 444 receives the uplink data of the communication terminal 60 for a first time. The session information acquisition unit 446 may acquire the session information of the communication terminal 60 from the memory unit when the data reception unit 444 receives the downlink data of the communication terminal 60 for a first time. On the other hand, the session information acquisition unit 446 acquires the session information of the communication terminal 60 from the storage unit 447 when the H-UPF 440 holds the session information of the communication terminal 60.

When the H-SMF 420 and the H-UPF 440 share a storage unit, the storage unit 426 and the storage unit 447 may be a same member. On the other hand, when the H-SMF 420 and the H-UPF 440 individually include storage units, the storage unit 426 and the storage unit 447 may be different members.

The data transmission unit 448 transmits the data of the communication terminal 60. The data transmission unit 448 transmits, for example, the data of the communication terminal 60 based on the session information of the communication terminal 60 acquired by the session information acquisition unit 446.

The data transmission unit 448 transmits, for example, the uplink data of the communication terminal 60. The data transmission unit 448 may transmit the downlink data of the communication terminal 60.

The data transmission unit 448 transmits, for example, the data of the communication terminal 60 by using a router. When the H-UPF 440 includes a router function, the data transmission unit 448 may transmit the data of the communication terminal 60 by using the router function of the H-UPF 440.

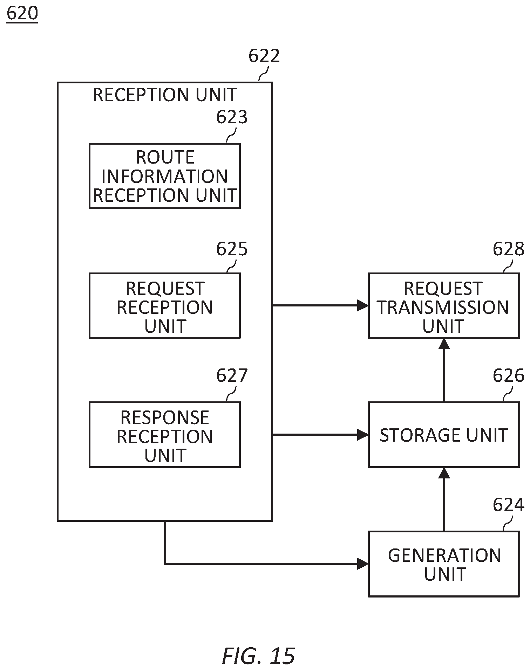

FIG. 15 schematically illustrates an example of a functional configuration of the V-SMF 620. The V-SMF 620 includes a reception unit 622, a generation unit 624, a storage unit 626, and a request transmission unit 628. The reception unit 622 includes a route information reception unit 623, a request reception unit 625, and a response reception unit 627. Note that the V-SMF 620 does not necessarily have all of these configurations.

The reception unit 622 receives various types of information. The reception unit 622 may store the received various types of information in the storage unit 626.

The reception unit 622 receives various types of information by using, for example, a router. When the V-SMF 620 includes a router function, the reception unit 622 may receive various types of information using the router function of the V-SMF 620.

The route information reception unit 623 receives route information. The route information reception unit 623 receives the route information from, for example, a router. The route information reception unit 623 may receive the route information from an IPX.

The generation unit 624 generates a route table. The generation unit 624 generates the route table based on, for example, the route information received by the route information reception unit 623. The generation unit 624 may store the generated route table in the storage unit 306.

The request reception unit 625 receives a session creation request of the communication terminal 60 that requests creation of a session to the PDN 40. The request reception unit 625 receives, for example, the session creation request of the communication terminal 60 from an AMF corresponding to the V-SMF 620.

The request transmission unit 628 transmits the session creation request of the communication terminal 60. The request transmission unit 628 transmits, for example, the session creation request of the communication terminal 60 in response to the request reception unit 625 receiving the session creation request of the communication terminal 60.

The request transmission unit 628 transmits, for example, the session creation request of the communication terminal 60 to an H-SMF selected, based on the H-SMF selection condition, as a transmission destination of the session creation request of the communication terminal 60 from among the plurality of H-SMFs included in the system 10. The request transmission unit 628 transmits, for example, the session creation request of the communication terminal 60 to an H-SMF having a route with a shortest distance to the V-SMF 620 among H-SMFs to which the session creation request of the communication terminal 60 is transmittable. In this case, the H-SMF selection condition is that the H-SMF has the route with the shortest distance to the V-SMF 620 among the H-SMFs to which the V-SMF 620 can transmit the session creation request of the communication terminal 60.

An entity that selects a transmission destination of the session creation request of the communication terminal 60 is, for example, a router. In this case, the request transmission unit 628 may transmit the session creation request of the communication terminal 60 to the transmission destination of the session creation request of the communication terminal 60 by using the router.

When the V-SMF 620 includes a router function, the entity that selects the transmission destination of the session creation request of the communication terminal 60 may be the V-SMF 620. In this case, the request transmission unit 628 may select the transmission destination of the session creation request of the communication terminal 60 in accordance with the BGP best path selection algorithm based on the route table stored in the storage unit 626, and transmit the session creation request of the communication terminal 60 to the selected transmission destination of the session creation request of the communication terminal 60.

The response reception unit 627 receives a session creation response for the communication terminal 60 to the session creation request of the communication terminal 60 transmitted by the request transmission unit 628. The response reception unit 627 receives, for example, the session creation response for the communication terminal 60 from an H-SMF selected as a transmission destination of the session creation request of the communication terminal 60.

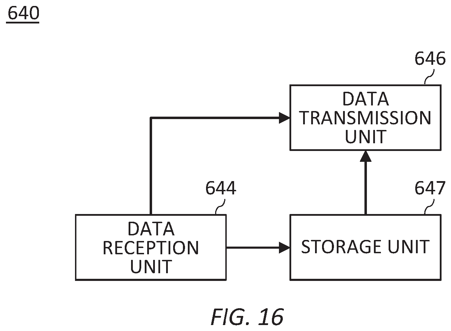

FIG. 16 schematically illustrates an example of a functional configuration of the V-UPF 640. The V-UPF 640 includes a data reception unit 644, a data transmission unit 646, and a storage unit 647. Note that the V-UPF 640 is not necessarily required to include all of these configurations.

The data reception unit 644 receives uplink data of the communication terminal 60. The data reception unit 644, for example, receives the uplink data of the communication terminal 60 from the communication terminal 60.

The data reception unit 644, for example, receives the uplink data of the communication terminal 60 by using a router. When the V-UPF 640 includes a router function, the data reception unit 644 may receive the uplink data of the communication terminal 60 by using the router function of V-UPF 640.

The data transmission unit 646 transmits the uplink data of the communication terminal 60. The data transmission unit 646, for example, transmits the uplink data of the communication terminal 60 received by the data reception unit 644. The data transmission unit 315, for example, transmits the uplink data of the communication terminal 60 after the V-SMF 620 receives the session creation response for the communication terminal 60.

The data transmission unit 646, for example, transmits the uplink data of the communication terminal 60 to an H-UPF selected, based on the H-UPF selection condition, as a transmission destination of the uplink data of the communication terminal 60 from among the plurality of H-UPFs included in the system 10. The data transmission unit 646, for example, transmits the uplink data of the communication terminal 60 to an H-UPF having a route with a shortest distance to the V-UPF 640 among H-UPFs to which the session creation request of the communication terminal 60 is transmittable. In this case, the H-UPF selection condition is that the H-UPF has the route with the shortest distance to the V-UPF 640 among the H-UPFs to which the V-UPF 640 can transmit the session creation request of the communication terminal 60.

The H-UPF selected as the transmission destination of the uplink data of the communication terminal 60 is disposed, for example, in the network in which the H-SMF selected as the transmission destination of the session creation request of the communication terminal 60 is disposed. The H-UPF selected as the transmission destination of the uplink data of the communication terminal 60 may be disposed in a network different from the network in which the H-SMF selected as the transmission destination of the session creation request of the communication terminal 60 is disposed. In this case, for example, the H-SMF selected as the transmission destination of the session creation request of the communication terminal 60 is disposed in the network of the first country, and the H-UPF selected as the transmission destination of the uplink data of the communication terminal 60 is disposed in the network of the second country different from the first country. Both the H-UPF selected as the transmission destination of the session creation request of the communication terminal 60 and the H-UPF selected as the transmission destination of the uplink data of the communication terminal 60 may be disposed in the first country.

An entity that selects the transmission destination of the uplink data of the communication terminal 60 is, for example, a router. In this case, the data transmission unit 646 may transmit the uplink data of the communication terminal 60 to the transmission destination of the uplink data of the communication terminal 60 by using the router.

When the V-UPF 640 includes a router function, the entity that selects the transmission destination of the uplink data of the communication terminal 60 may be the V-UPF 640. In this case, the data transmission unit 646 may select the transmission destination of the uplink data of the communication terminal 60 in accordance with the BGP best path selection algorithm based on the route table stored in the storage unit 647, and may transmit the uplink data of the communication terminal 60 to the selected transmission destination of the uplink data of the communication terminal 60.

When the V-SMF 620 and the V-UPF 640 share a storage unit, the storage unit 626 and the storage unit 647 may be a same member. On the other hand, when the V-SMF 620 and the V-UPF 640 individually include storage units, the storage unit 626 and the storage unit 647 may be different members.

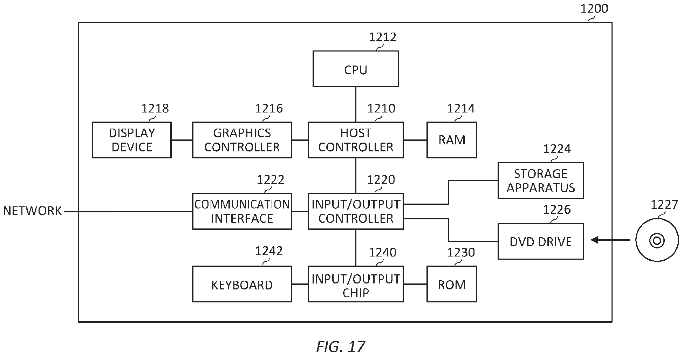

FIG. 17 schematically illustrates an example of a hardware configuration of a computer 1200 functioning as the PGW 100, the SGW 300, the H-SMF 420, the H-UPF 440, the V-SMF 620, or the V-UPF 640. Programs installed in the computer 1200 can cause the computer 1200 to function as one or more "units" of the apparatus according to the above-described embodiment or can cause the computer 1200 to execute operations associated with the apparatuses according to the above-described embodiment or said one or more "units", and/or can cause the computer 1200 to execute a process according to the above-described embodiment or steps of said process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes a communication interface 1222, a storage apparatus 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage apparatus 1224 may be a hard disk drive, a solid-state drive, and the like. The computer 1200 also includes legacy input/output units such as a ROM 1230 and a keyboard 1242, which are connected to the input/output controller 1220 through an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage apparatus 1224 stores a program and data used by the CPU 1212 in the computer 1200. The DVD drive 1226 is configured to read the programs or the data from the DVD-ROM 1227 or the like, and to provide the storage apparatus 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage apparatus 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage apparatus 1224, the DVD-ROM 1227, or the IC card, and transmits the read transmission data to a network or writes reception data received from a network to a reception buffer region or the like provided on the recording medium.

In addition, the CPU 1212 may be configured to cause all or a necessary portion of a file or a database, which has been stored in an external recording medium such as the storage apparatus 1224, the DVD drive 1226 (DVD-ROM 1227), the IC card and the like, to be read into the RAM 1214, thereby executing various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the said plurality of entries, and read the attribute value of the second attribute stored in the said entry, thereby acquiring the attribute value of the second attribute associated with the first attribute that satisfies a predetermined condition.

The programs or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon constitutes a product including an instruction that may be executed in order to provide means for executing an operation designated by a flowchart or a block diagram. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process executed by an apparatus, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: system; 12: network; 13: network; 14: network; 15: network; 22: router; 23: router; 24: router; 25: router; 26: router; 27: router; 32: database; 33: database; 34: database; 35: database; 40: PDN; 48: database; 60: communication terminal; 82: router; 83: router; 84: router; 85: router; 100: PGW; 103: request reception unit; 104: session information creation unit; 106: storage unit; 108: registration unit; 110: session information synchronization unit; 112: response transmission unit; 113: data reception unit; 114: session information acquisition unit; 116: data transmission unit; 120: PGW-C; 140: PGW-U; 200: PGW; 220: PGW-C; 240: PGW-U; 300: SGW; 302: reception unit; 303: route information reception unit; 304: generation unit; 305: request reception unit; 306: storage unit; 307: response reception unit; 309: data reception unit; 312: transmission unit; 313: request transmission unit; 315: data transmission unit; 320: SGW-C; 340: SGW-U; 420: H-SMF; 422: request reception unit; 424: session information creation unit; 426: storage unit; 428: registration unit; 430: session information synchronization unit; 432: response transmission unit; 440: H-UPF; 444: data reception unit; 446: session information acquisition unit; 447: storage unit; 448: data transmission unit; 520: H-SMF; 540: H-UPF; 620: V-SMF; 622: reception unit; 623: route information reception unit; 624: generation unit; 625: request reception unit; 626: storage unit; 627: response reception unit; 628: request transmission unit; 640: V-UPF; 644: data reception unit; 646: data transmission unit; 647: storage unit; 700: resource management apparatus; 1200: computer; 1210: host controller; 1212: CPU; 1214: RAM; 1216: graphics controller; 1218: display device; 1220: input/output controller; 1222: communication interface; 1224: storage apparatus; 1226: DVD drive; 1227: DVD-ROM; 1230: ROM; 1240: input/output chip; and 1242: keyboard.

## Claims

1. A system comprising:
a Serving Gateway (SGW);
a plurality of Packet data network Gateways (PGWs); and
a memory unit, wherein
each PGW of the plurality of PGWs is disposed in a network having a different Autonomous System number (ASN), and a same IP (Internet Protocol) address is assigned to each PGW of the plurality of PGWs,
the SGW includes
a request transmission unit that transmits a session creation request of a communication terminal requesting creation of a session to a Packet Data Network (PDN), to a PGW selected as a transmission destination of the session creation request from among the plurality of PGWs based on a predetermined PGW selection condition,
the PGW selected as the transmission destination of the session creation request includes
a request reception unit that receives the session creation request,
a session information creation unit that creates session information of the communication terminal including an IP address of the communication terminal, the IP address of the PGW, a Tunnel Endpoint Identifier (TEID) assigned to a communication tunnel of each PGW, an IP address of the SGW, and a TEID assigned to a communication tunnel of the SGW, in response to the request reception unit receiving the session creation request,
a registration unit that registers the session information created by the session information creation unit in the memory unit, and
a response transmission unit that transmits, to the SGW, a session creation response for the communication terminal in response to the session information creation unit creating the session information,
the SGW further includes
a response reception unit that receives the session creation response, and
a data transmission unit that transmits, after the response reception unit receives the session creation response, uplink data of the communication terminal to a PGW selected as a transmission destination of the uplink data from among the plurality of PGWs based on the PGW selection condition, and
the PGW selected as the transmission destination of the uplink data includes a first data reception unit that receives the uplink data, and
a first session information acquisition unit that acquires the session information from the memory unit when the first data reception unit receives the uplink data and when the PGW does not hold the session information.

2. The system according to claim 1, wherein the PGW selected as the transmission destination of the uplink data is a same PGW as the PGW selected as the transmission destination of the session creation request.

3. The system according to claim 1, wherein the PGW selected as the transmission destination of the uplink data is a PGW different from the PGW selected as the transmission destination of the session creation request.

4. The system according to claim 3, wherein the PGW selected as the transmission destination of the session creation request is disposed in the network of a first country, and the PGW selected as the transmission destination of the uplink data is disposed in the network of a second country different from the first country.

5. The system according to any one of claims 1 to 4, wherein the first session information acquisition unit acquires the session information from the memory unit when the first data reception unit receives the uplink data for a first time.

6. The system according to any one of claims 1 to 5, wherein
a PGW that is a transmission destination of downlink data of the communication terminal among the plurality of PGWs includes
a second data reception unit that receives the downlink data, and
a second session information acquisition unit that acquires the session information from the memory unit when the second data reception unit receives the downlink data and when the PGW does not hold the session information.

7. The system according to any one of claims 1 to 6, wherein
the SGW is separated into an SGW-Control plane function (SGW-C) and an SGW-User plane function (SGW-U),
each PGW of the plurality of PGWs is separated into a PGW-Control plane function (PGW-C) and a PGW-User plane function (PGW-U),
a same IP address is assigned to each PGW-C, and a same IP address is assigned to each PGW-U,
the IP address of the PGW includes the IP address of the PGW-C and the IP address of the PGW-U different from the IP address of the PGW-C,
the TEID assigned to the communication tunnel of each PGW includes a TEID assigned to a communication tunnel of each PGW-C and a TEID assigned to a communication tunnel of each PGW-U and different from the TEID assigned to the communication tunnel of each PGW-C,
the IP address of the SGW includes an IP address of the SGW-C and an IP address of the SGW-U different from the IP address of the SGW-C, and
the TEID assigned to the communication tunnel of the SGW includes a TEID assigned to a communication tunnel of the SGW-C and a TEID assigned to a communication tunnel of the SGW-U and different from the TEID assigned to the communication tunnel of the SGW-C.

8. The system according to any one of claims 1 to 7, wherein
the memory unit is disposed on a cloud, and
each PGW of the plurality of PGWs is capable of accessing the memory unit.

9. A system comprising:
a Visited Session Management Function (V-SMF);
a Visited User Plane Function (V-UPF) disposed in a network in which the V-SMF is disposed;
a plurality of Home Session Management Functions (H-SMFs);
a plurality of Home User Plane Functions (H-UPFs); and
a memory unit, wherein
each H-SMF of the plurality of H-SMFs is disposed in a network having a different ASN, and a same IP address is assigned to each H-SMF,
each H-UPF of the plurality of H-UPFs is disposed in a network having a different ASN, and a same IP address is assigned to each H-UPF,
the V-SMF includes
a request transmission unit that transmits a session creation request of a communication terminal requesting creation of a session to a PDN, to an H-SMF selected as a transmission destination of the session creation request from among the plurality of H-SMFs based on a predetermined H-SMF selection condition,
the H-SMF selected as the transmission destination of the session creation request includes
a request reception unit that receives the session creation request,
a session information creation unit that creates session information of the communication terminal including an IP address of the communication terminal, the IP address of the H-SMF, the IP address of the H-UPF different from the IP address of the H-SMF, a TEID assigned to a communication tunnel of each H-SMF, a TEID assigned to a communication tunnel of each H-UPF and different from the TEID assigned to the communication tunnel of each H-SMF, an IP address of the V-SMF, an IP address of the V-UPF different from the IP address of the V-SMF, a TEID assigned to a communication tunnel of the V-SMF, and a TEID assigned to a communication tunnel of the V-UPF and different from the TEID assigned to the communication tunnel of the V-SMF, in response to the request reception unit receiving the session creation request,
a registration unit that registers the session information created by the session information creation unit in the memory unit, and
a response transmission unit that transmits, to the V-SMF, a session creation response for the communication terminal in response to the session information creation unit creating the session information,
the V-SMF further includes
a response reception unit that receives the session creation response,
the V-UPF includes
a data transmission unit that transmits, after the V-SMF receives the session creation response, uplink data of the communication terminal to an H-UPF selected as a transmission destination of the uplink data from among the plurality of H-UPFs based on a predetermined H-UPF selection condition, and
the H-UPF selected as the transmission destination of the uplink data includes
a data reception unit that receives the uplink data, and
a session information acquisition unit that acquires the session information from the memory unit when the data reception unit receives the uplink data and when the H-UPF does not hold the session information.

10. A method executed by a system including an SGW, a plurality of PGWs, and a memory unit, in which each PGW of the plurality of PGWs is disposed in a network having a different ASN and a same IP address is assigned to each PGW, the method comprising:
transmitting a request by the SGW transmitting a session creation request of a communication terminal requesting creation of a session to a PDN, to a PGW selected as a transmission destination of the session creation request from among the plurality of PGWs based on a predetermined PGW selection condition;
receiving a request by the PGW selected as the transmission destination of the session creation request receiving the session creation request;
creating, by the PGW selected as the transmission destination of the session creation request, session information of the communication terminal including an IP address of the communication terminal, the IP address of the PGW, a TEID assigned to a communication tunnel of each PGW, an IP address of the SGW, and a TEID assigned to a communication tunnel of the SGW, in response to the session creation request being received in the receiving the request;
registering, by the PGW selected as the transmission destination of the session creation request, the session information created in the creating the session information in the memory unit;
transmitting a response by the PGW selected as the transmission destination of the session creation request transmitting, to the SGW, a session creation response for the communication terminal in response to the session information being created in the creating the session information;
receiving the response by the SGW receiving the session creation response;
transmitting data by the SGW transmitting, after the session creation response is received in the receiving the response, uplink data of the communication terminal to a PGW selected as a transmission destination of the uplink data from among the plurality of PGWs based on the PGW selection condition;
receiving the data by the PGW selected as the transmission destination of the uplink data receiving the uplink data; and
acquiring the session information by the PGW selected as the transmission destination of the uplink data acquiring the session information from the memory unit when the uplink data is received in the receiving the data and when the PGW does not hold the session information.

11. A method executed by a system including: a V-SMF, a V-UPF disposed in a network in which the V-SMF is disposed, a plurality of H-SMFs, a plurality of H-UPFs, and a memory unit, in which each H-SMF of the plurality of H-SMFs is disposed in a network having a different ASN and a same IP address is assigned to each H-SMF, and each H-UPF of the plurality of H-UPFs is disposed in a network having a different ASN and a same IP address is assigned to each H-UPF, the method comprising:
transmitting a request by the V-SMF transmitting a session creation request of a communication terminal requesting creation of a session to a PDN, to an H-SMF selected as a transmission destination of the session creation request from among the plurality of H-SMFs based on a predetermined H-SMF selection condition;
receiving the request by the H-SMF selected as the transmission destination of the session creation request receiving the session creation request;
creating, by the H-SMF selected as the transmission destination of the session creation request, session information of the communication terminal including an IP address of the communication terminal, the IP address of the H-SMF, the IP address of the H-UPF different from the IP address of the H-SMF, a TEID assigned to a communication tunnel of each H-SMF, a TEID assigned to a communication tunnel of each H-UPF and different from the TEID assigned to the communication tunnel of each H-SMF, an IP address of the V-SMF, an IP address of the V-UPF different from the IP address of the V-SMF, a TEID assigned to a communication tunnel of the V-SMF, and a TEID assigned to a communication tunnel of the V-UPF and different from the TEID assigned to the communication tunnel of the V-SMF, in response to the session creation request being received in the receiving the request;
registering, by the H-SMF selected as the transmission destination of the session creation request, the session information created in the creating the session information, in the memory unit;
transmitting a response by transmitting, by the H-SMF selected as the transmission destination of the session creation request, to the V-SMF, a session creation response for the communication terminal in response to the session information being created in the creating the session information;
receiving the response by the V-SMF receiving the session creation response;
transmitting data by the V-UPF transmitting, after the V-SMF receives the session creation response in the receiving the response, uplink data of the communication terminal to an H-UPF selected as a transmission destination of the uplink data from among the plurality of H-UPFs based on a predetermined H-UPF selection condition;
receiving the data by the H-UPF selected as the transmission destination of the uplink data receiving the uplink data; and
acquiring, by the H-UPF selected as the transmission destination of the uplink data, the session information from the memory unit when the uplink data is received in the receiving the data and when the H-UPF does not hold the session information.
